(19) **Europäisches Patentamt**
**European Patent Office**
**Office européen des brevets**

(11) **EP 4 787 098 A1**

(12) **EUROPEAN PATENT APPLICATION**
published in accordance with Art. 153(4) EPC

(43) Date of publication:
05.08.2026 Bulletin 2026/32

(21) Application number: 23954151.9

(22) Date of filing: 26.09.2023

(51) International Patent Classification (IPC):
*G05B 23/02* (2006.01)     *H04L 7/00* (2006.01)
*G05B 19/042* (2006.01)

(52) Cooperative Patent Classification (CPC):
G05B 19/042; G05B 23/02; H04L 7/00

(86) International application number:
PCT/JP2023/034878

(87) International publication number:
WO 2025/069174 (03.04.2025 Gazette 2025/14)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Movensys Inc.**
**Gyeonggi-do (KR)**

(72) Inventors:
• PAN, Ziyuan
  Tokyo 169-0074 (JP)
• KASAHARA, Kohei
  Tokyo 169-0074 (JP)
• XU, Zhiguang
  Tokyo 169-0074 (JP)
• YANG, Boo-Ho
  Tokyo 169-0074 (JP)

(74) Representative: **EIP**
**Fairfax House**
**15 Fulwood Place**
**London WC1V 6HU (GB)**

(54) **INFORMATION PROCESSING DEVICE, INFORMATION PROCESSING METHOD, AND PROGRAM**

(57)    There is provided an information processing device connected to a master and one or more slaves via an industrial network, the information processing device including a reception unit that receives a frame repeatedly transmitted from the master in the industrial network, a first storage unit that stores log data of the frame, an extraction unit that, when occurrence of an abnormality in the master or the one or more slaves has been detected, extracts, from the first storage unit, log data of the frame until a predetermined time before time when the occurrence of the abnormality was detected, a second storage unit that stores the extracted log data of the frame as pre-failure log data, and a transmission unit that transmits the pre-failure log data to the master via the industrial network in response to a request from the master.

*FIG.6*

EP 4 787 098 A1

## Description

## Technical Field

The present disclosure relates to an information processing device, an information processing method, and a program.

## Background Art

In the fields of robots, FA (factory automation), and the like, it is required to cause the position of a belt conveyor, the position of an arm, and the like to operate as intended. In order to cause the belt conveyor, the arm, and the like to operate in this way, it is necessary to cause a plurality of control target devices such as a servo motor and a stepping motor to operate while highly accurately synchronizing the plurality of control target devices. For example, Patent Literature 1 discloses a motion control command system capable of implementing smooth control while using inexpensive and simple low-speed communication.

## Citation List

## Patent Literature

Patent Literature 1: Japanese Patent Laid-Open No. 2010-170435

## Summary of Invention

## Technical Problem

In a control system including a controller and control target equipment, a network connecting the controller and the control target equipment is called industrial network. When an abnormality has occurred in an operation of the control system connected by the industrial network, it is desirable to investigate by what kind of a cause the abnormality has been caused and smoothly perform restoration taking into account a result of the investigation.

Thus, an object of the present disclosure is to provide a technique for making it possible to more quickly perform an abnormality analysis and/or restoration when an abnormality has occurred in a control system connected by an industrial network.

## Solution to Problem

An information processing device according to an aspect of the present disclosure is an information processing device connected to a master and one or more slaves via an industrial network, the information processing device including: a reception unit that receives a frame repeatedly transmitted from the master in the industrial network; a first storage unit that stores log data of the frame; an extraction unit that, when occurrence of an abnormality in the master or the one or more slaves has been detected, extracts, from the first storage unit, log data of the frame until a predetermined time before time when the occurrence of the abnormality has been detected; a second storage unit that stores the extracted log data of the frame as pre-failure log data; and a transmission unit that transmits the pre-failure log data to the master via the industrial network in response to a request from the master.

## Advantageous Effect of Invention

According to the present disclosure, it is possible to provide a technique that makes it possible to more quickly perform an abnormality analysis and/or restoration when an abnormality has occurred in a control system connected by an industrial network.

## Brief Description of Drawings

[Figure 1] Figure 1 is a diagram illustrating an example of a control system 1 according to an embodiment.

[Figure 2] Figure 2 is a diagram illustrating a structure example of a frame used in an industrial network.

[Figure 3] Figure 3 is a diagram for explaining time synchronization processing.

[Figure 4] Figure 4 is a diagram illustrating a configuration example of a slave.

[Figure 5] Figure 5 is a diagram illustrating a hardware configuration example of a monitoring device.

[Figure 6] Figure 6 is a diagram illustrating a functional block configuration example of the monitoring device.

[Figure 7] Figure 7 is a diagram illustrating a state in which synchronization processing is normally operating.

[Figure 8] Figure 8 is a diagram for explaining an event that occurs when an abnormality has occurred in a master and frames cannot be transmitted at equal intervals.

[Figure 9] Figure 9 is a diagram for explaining an event that occurs when an abnormality has occurred in a local clock of a synchronous master-slave and a shift has occurred in reference time.

[Figure 10] Figure 10 is a diagram for explaining an event that occurs when an abnormality has occurred in a local clock of the monitoring device.

[Figure 11] Figure 11 is a diagram illustrating a relation between combinations of synchronization processing abnormalities and causes of occurrence of the synchronization processing abnormalities.

[Figure 12] Figure 12 is a flowchart illustrating an example of a processing procedure for detecting a synchronization processing abnormality.

[Figure 13] Figure 13 is a diagram illustrating a specific example of synchronization abnormality detection processing.

[Figure 14] Figure 14 is a diagram for explaining a modification [Figure 15] Figure 15 is a diagram for explaining the modification.

[Figure 16] Figure 16 is a sequence diagram illustrating an example of a processing procedure in extracting log data and transmitting the log data to the master when an abnormality has occurred.

[Figure 17] Figure 17 is a diagram illustrating an example of data of a frame stored in pre-failure log data.

**Description of Embodiments**

An embodiment of the present disclosure is described with reference to the accompanying drawings. Note that, in the figures, items denoted by the same reference numerals and signs have the same or similar configurations.

<System configuration>

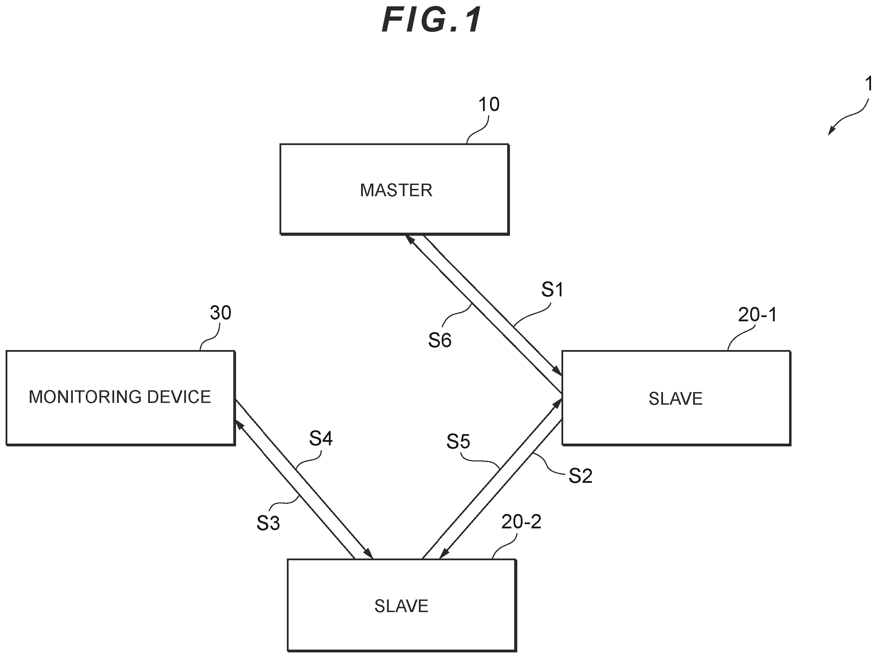

Figure 1 is a diagram illustrating an example of a control system 1 according to the present embodiment. The control system 1 includes a master 10, one or more slaves 20, and a monitoring device 30. The master 10, the one or more slaves 20, and the monitoring device 30 are connected via an industrial network.

The master 10 is a device that controls the slave 20 to implement predetermined functions in the control system 1. The master 10 may be, for example, a motion controller, a sequence controller, or a robot controller. The master 10 may be called controller, control device, and the like. The master 10 may be a device implemented using dedicated hardware or may be a general-purpose information processing device in which a non-real time OS and a real time OS are installed. Specific examples of the non-real time OS include Windows (registered trademark) and macOC (registered trademark). Specific examples of the real time OS include RTX (Real Time Extension) and RTH (Real Time Hypervisor). Specific examples of the general-purpose information processing device include a PC (personal computer), a notebook PC, and a server.

The slave 20 is, for example, a servo motor (including a servo driver), a stepping motor, or a sensor and is a device that executes various kinds of processing in the control system 1. The slaves are divided into a communication processing unit that processes a communication protocol used in the industrial network and an application unit that performs processing such as motion control.

The monitoring device 30 is a device that monitors an operation state of the control system 1 and always records a frame (which may be called data or packet) flowing in the industrial network and detects occurrence of an abnormality in the control system 1. The monitoring device 30 operates as the slave 20 in the control system 1. That is, the monitoring device 30 is recognized as the slave 20 from the master 10. The monitoring device 30 may be a device implemented using a dedicated hardware or may be a general-purpose information processing device or computer in which a non-real time OS and a real time OS are installed.

Examples of a protocol used for the industrial network includes EtherCAT (registered trademark) and Ethernet/IP. In the following description, it is assumed that the industrial neatwork is the EtherCAT. However, the present embodiment is not limited thereto. The protocol may be any communication protocol if the communication protocol is a communication protocol for performing communication in a master/slave scheme, the communication protocol including a synchronization function described below.

In the industrial network, the master 10 and the slaves 20 (including the monitoring device 30) perform communication in an on-the-fly scheme. In the on-the-fly scheme, one fixed-length frame transmitted from the master 10 passes through the slaves 20 in order and finally returns to the master 10. When a frame passes through the slaves 20, the slaves 20 can read, from the frame, data addressed to the slaves 20 and write, in the frame, data addressed to the master 10 or the other slaves 20. In the example illustrated in Figure 1, a frame transmitted from the master 10 passes through the slaves 20 and the monitoring device 30 in the order of S1 to S6 and returns to the master 10. Note that the slaves 20 perform processing when the frame passes through the monitoring device 30 first and do not perform processing for the frame when the frame returns from the monitoring device 30 to the master 10. For example, a slave 20-1 performs processing (data write and/or read) for the frame received in S1 but does not perform processing for the frame received in S5 and directly transfers the frame to the master 10. Similarly, a slave 20-2 performs processing (data write and/or read) for the frame received in S2 but does not perform processing for the frame received in S4 and directly transfers the frame to the slave 20-1.

In the present embodiment, in order to detect abnormalities that occur in the master 10 and the slaves 20, the monitoring device 30 is connected behind all the slaves 20 in the industrial network. In other words, the monitoring device 30 functions as the slave 20 at the terminal end. For example, it is assumed that the slave 20-1 and the slave 20-2 are present in the control system 1. In this case, the monitoring device 30 is connected to the industrial network such that the frame output from the master 10 passes through the slave 20-1, the slave 20-2, and the monitoring device 30 in this order.

(Frame structure used in the industrial network)

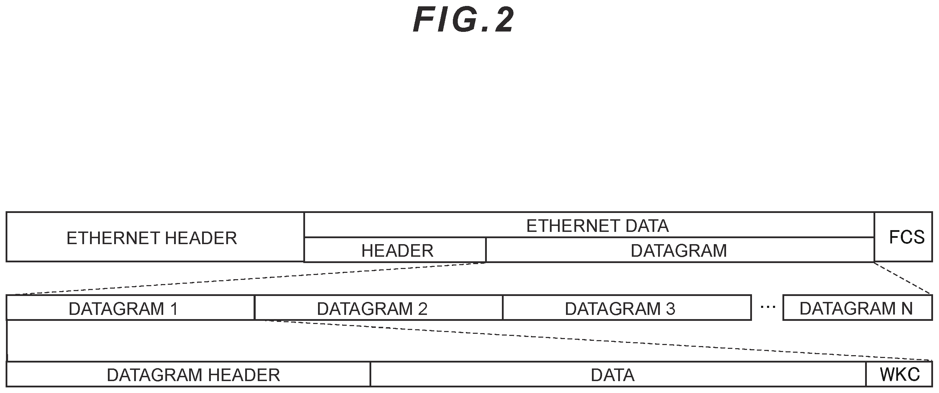

Figure 2 is a diagram illustrating a structure example of a frame used in the industrial network. One frame includes an Ethernet Header, Ethernet Data, and an FCS (Flame Check Sequence). The Ethernet Data includes a Header and a Datagram.

The Datagram is further divided into N data gram regions. The datagram regions further include a datagram header, data, and a working counter (WKC). In the datagram header, a command indicating a data processing method (value write, value read, and the like) and an address indicating a destination for which the data is processed are stored.

In the industrial network, different datagrams are used when data is transmitted from the master 10 to the slave 20 and when data is transmitted from the slave 20 to the master 10. That is, at least two datagrams are allocated to one slave 20 that transmits and receives data to and from the master 10.

Here, in order for the master 10 to write a value in a memory (also called register) included in the slave 20 and read value from the memory included in the slave 20, the master 10 needs to designate an address of the target memory in which the value is written or from which the value is read. In the industrial network, there are two methods as a method of designating the address of the memory.

A first method is a method of combining an identifier (called "setting address" in the EtherCAT) for identifying the slave 20 and an address (meaning an actual address and called "register address" in the EtherCAT) of the memory included in the slave 20 to directly designate a physical address of the memory. Note that, when the value is written in and read from the memory included in the slave 20, an index and a subindex can also be used instead of the register address. The index and the subindex are associated with content of data stored in the memory. By designating the index and the subindex, it is possible to write and read the value without being aware of the actual address. Note that a correspondence relation between the index and the subindex and an address of the memory is defined in advance in the slave 20.

A second method is a method of collectively regarding, as one memory space, memory spaces included in all the slaves 20 present in the control system 1 and expressing a position in the memory space with one logical address. Note that data indicating a correspondence relation between the logical address and addresses (actual addresses) of the memories included in the slaves 20 is set in the slaves 20 in advance. By using the logical address, the master 10 can write and read data without being aware of which slave 20 the master 10 is accessing.

In addition to the designation of the address of the memory, the master 10 designates a command to perform processing of writing a value in the memory and reading a value from the memory. Examples of the command include FPWR (data write designating the slave 20 and an actual address), FPRD (data read designating the slave 20 and an actual address), LWR (data write designating a logical address), and LRD (data read designating a logical address).

(Overview of synchronization processing)

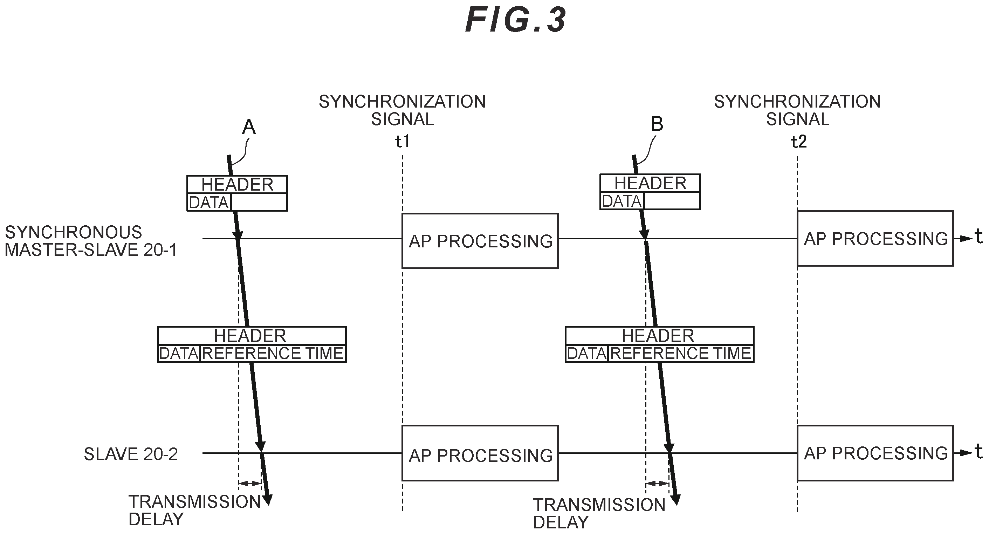

Figure 3 is a diagram for explaining an overview of synchronization processing. The industrial network includes a mechanism of performing highly accurate time synchronization (for example, a shift of the time synchronization is 1 microsecond or less) among the slaves 20. In the case of the EtherCAT, the synchronization processing is called DC (Distributed Clocks) synchronization. When the synchronization processing is executed, the slaves 20 are synchronized at predetermined time serving as a reference (hereinafter referred to as "reference time") and perform various kinds of processing according to the reference time. Note that the accuracy of a clock included in the master 10 is often lower than the accuracy of a clock included in the slave 20 for a cost reduction. Therefore, in the synchronization processing, a local clock held by the slave 20 capable of executing the synchronization processing among the slaves 20 connected in series to the industrial network may be used as the reference time. In the following description, the slave 20, the local clock of which is used as the reference time, is referred to as "synchronous master-slave". Note that, in the present embodiment, in the following description, it is assumed that the synchronous master-slave is a first slave 20 (in the example illustrated in Figure 1, the slave 20-1) capable of executing the synchronization processing among the slaves 20 connected in series to the industrial network. The reference time is called reference clock in the EtherCAT. Note that, when the master 10 holds a highly accurate clock equivalent to the clock of the slave 20, the local clock of the master 10 may be used as the reference time.

The reference time is expressed by absolute time starting from certain time (zero). The reference time may be expressed by a value of a predetermined number of bits. For example, in the EtherCAT, the reference time is expressed by a numerical value of 32 bits or 64 bits starting from 0:00, January 1, 2001. A minimum unit of the reference time may be 1 microsecond or 1 nanosecond.

In order to implement the synchronization processing, the master 10 measures, in advance, according to EtherCAT specifications, frame propagation delays between the synchronous master-slave and the slaves 20, differences (offset values) between the reference time and local clocks of the slaves, and the like and writes the propagation delays, the differences, and the like in the memories of the slaves 20. The slaves 20 other than the synchronous master-slave can calculate reference time by adding the offset values to the local clocks of the slaves 20.

Note that, in general, a very small shift (also called drift) is present in time ticked by a clock. Therefore, when a long time elapses after synchronization is completed, a shift from the reference time also increases. Thus, the master 10 periodically distributes the reference time in order to suppress the shift from the reference time (that is, compensate for the drift of the clock).

Specifically, according to an instruction of the master 10, the synchronous master-slave stores the reference time in a frame received from the master 10 and transmits the frame in which the reference time is stored to the next slave 20. The slaves 20 acquire the reference time from the received frame in which the reference time is stored and write the acquired reference time frame in the memories of the slaves 20 themselves. In the following description, a frame for distributing the reference time to the slaves 20 is referred to as "reference time frame". Note that all frames repeatedly transmitted from the master 10 may be reference time frames. Alternatively, the reference time frame may be one frame at every N frames (N is a natural number) among all the frames repeatedly transmitted from the master 10. In the example illustrated in Figure 3, a state in which all the frames are reference time frames and the synchronous master-slave 20-1 stores the reference time in frames A and B received from the master 10 and transmits the frames A and B to the slave 20-2 is illustrated.

The slaves 20 other than the synchronous master-slave acquire the reference time from the received reference time frame. As described above, since the slaves 20 grasp the propagation delays between the slaves 20 and the synchronous master-slave, the slaves 20 can recognize correct reference time by adding the propagation delays to the reference time included in the reference time frame. That is, the slaves 20 other than the synchronous master-slave can correct, based on the reference time included in the reference time frame, the reference time recognized by the slaves 20 to correct reference time.

As described above, the synchronous master-slave stores the time of the local clock of the synchronous master-slave itself as the reference time in the frame received from the master 10 and transmits the frame to the next slave 20. A value of the local clock stored as the reference time by the synchronous master-slave only has to be a time period from when the synchronous master-slave receives the frame until when the synchronous master-slave transmits the frame in which the reference time is stored to the next slave 20.

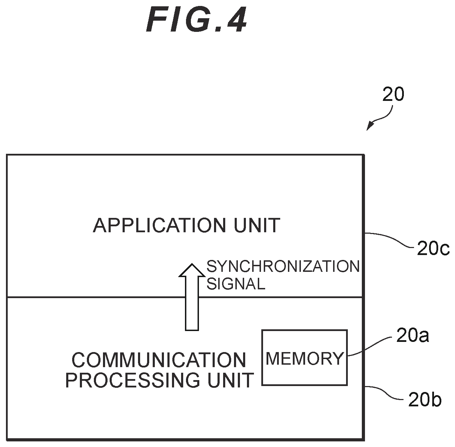

Figure 4 is a diagram illustrating a configuration example of the slave. Communication processing units 20b included in slaves refer to the reference time, propagation delays, offsets, and the like written in memories 20a of the communication processing units and synchronize with the reference time. Subsequently, the slaves repeatedly generate synchronization signals at a predetermined period according to the synchronized reference time and notify the synchronization signals to application units 20c included in the slaves. The synchronization signal is called SYNC0/SYNC1 or the like in the EtherCAT. First time when the synchronization signals are repeatedly generated (hereinafter referred to as "the synchronization signal start time") and a generation period of the synchronization signals (hereinafter referred to as "synchronization signal period" are notified from the master 10 to the slaves 20 in advance. The synchronization signal start time is designated as absolute time according to a time axis of the reference time.

When the synchronization processing is used, the master 10 repeatedly transmits a frame at the same period as the generation period of the synchronization signal such that one frame arrives at the slaves 20 between continuous two synchronization signals. However, as described above, the accuracy of the clock included in the master 10 is often lower than the accuracy of the clock included in the slave 20. Therefore, some variation sometimes occurs in a period of the frame arriving at the slaves 20 compared with the period of the synchronization signal being generated in the slaves 20.

The frame repeatedly transmitted by the master 10 at the predetermined period includes, in addition to the reference time described above, a region where data is stored. In the region, for example, a command for writing values in the memories of the slaves 20 and the values and/or a command for reading values from the memories 20a of the slaves 20 is stored. The communication processing unit 20b of the slave 20 reads a value from the received frame and writes the value in the memory 20a according to the command. At timing when the synchronization signal is notified from the communication functioning unit, the application unit 20c of the slave 20 performs application processing (for example, motion control) using the value written in the memory 20a. That is, as long as the time synchronization function normally operates and the master 10 continues transmitting a frame at the predetermined period, timings when synchronization signals are generated in the slaves 20 coincide among the slaves 20 and timings when the slaves 20 perform the application processing also coincide.

For example, as illustrated in Figure 3, an arrival time of the frame delays in the slave 20-2 by a propagation delay between the synchronous master-slave 20-1 and the slave 20-2. However, since the application processing (AP processing) is executed with the synchronization signal as a trigger, timing when the application processing is started in the synchronous master-slave 20-1 and timing when the application processing is started in the slave 20-2 coincide.

(Overview of processing performed by the monitoring device)

In the present embodiment, the monitoring device 30 performs the following processing.

1. Detection of a synchronization processing abnormality: The monitoring device 30 detects occurrence of an abnormality in the synchronization processing and notifies the occurrence of the abnormality to a user who manages the control system 1 or to the master 10.

2. Frame recording immediately before abnormality occurrence: The monitoring device 30 always records (captures) a frame flowing in the industrial network and saves log data of captured one or more frames. When occurrence of an abnormality in the control system 1 has been detected, the monitoring device 30 extracts, from the saved log data, log data of one or more frames flowing in the industrial network in a predetermined period before the abnormality occurrence. When receiving a request from the master 10, the monitoring device 30 transmits the extracted log data of the one or more frames to the master 10 via the industrial network.

<Hardware configuration>

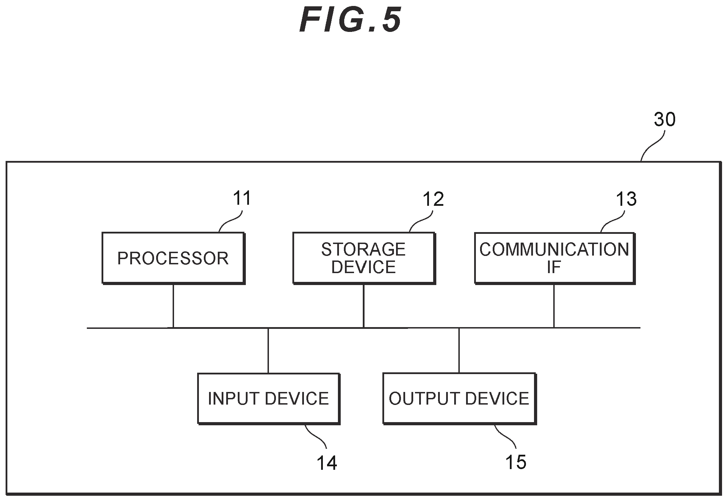

Figure 5 is a diagram illustrating a hardware configuration example of the monitoring device 30. The monitoring device 30 includes a processor 11 such as a CPU (Central Processing unit) or a GPU (Graphical Processing unit), a storage device 12 such as a memory (for example, a RAM (Random Access Memory) or a ROM (Read Only Memory)) or a HDD (Hard Disk Drive) and/or an SSD (Solid State drive), a network IF (Network Interface) 13 that performs wired or wireless communication, an input device 14 that receives input operation, and an output device 15 that outputs information. The input device 14 is, for example, a keyboard, a touch panel, a mouse, and/or a microphone. The output device 15 is, for example, a display, a touch panel, and/or a speaker.

<Functional block configuration>

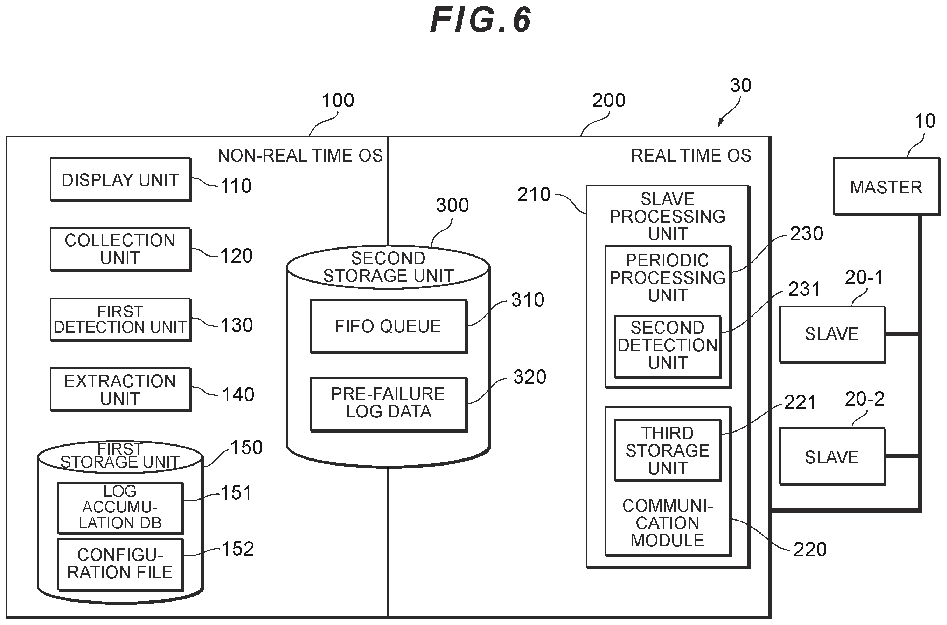

Figure 6 is a diagram illustrating a functional block configuration example of the monitoring device 30. The monitoring device 30 includes a non-real time OS 100, a real time OS 200, and a second storage unit 300. The non-real time OS 100 includes a display unit 110, a collection unit 120, a first detection unit 130, an extraction unit 140, and a first storage unit 150. The real time OS 200 includes a slave processing unit 210. The slave processing unit 210 includes a communication module 220 and a periodic processing unit 230. The communication module 220 includes a third storage unit 221. The periodic processing unit 230 includes a second detection unit 231.

The first storage unit 150, the second storage unit 300, and the third storage unit 221 can be implemented using the storage device 12 included in the monitoring device 30. The display unit 110, the collection unit 120, the first detection unit 130, the extraction unit 140, and the slave processing unit 210 can be implemented by the processor 11 of the monitoring device 30 executing a program stored in the storage device 12. The program can be stored in a storage medium. The storage medium storing the program may be a non-transitory computer readable storage medium. The non-transitory storage medium is not particularly limited but may be a storage medium such as a USB (Universal Serial Bus) memory or a CD-ROM (Compact Disc Read Only Memory).

The first storage unit 150 is provided in the non-real time OS and stores a log accumulation DB (DataBase) 151 and a configuration file 152. The log accumulation DB 151 is a database that stores a frame flowing in the industrial network, the frame being captured by the communication module 220 of the real time OS 200. The configuration file 152 stores various data for specifying operations of the monitoring device 30.

The second storage unit 300 is provided in a memory that can be referred to from both of the non-real time OS 100 and the real time OS.

The display unit 110 operates on the non-real time OS and causes a display or the like to display various screens. For example, the display unit 110 causes the display or the like to display a screen showing content and the like of a detected abnormality.

The collection unit 120 operates on the non-real time OS and acquires, from the real time OS 200, via an FIFO (First In First Out) queue 310 included in the second storage unit 300, a frame flowing in the industrial network and stores the frame in the log accumulation DB 151 of the first storage unit 150. In other words, the first storage unit 150 (the log accumulation DB 151) stores log data of received one or more frames.

The first detection unit 130 operates on the non-real time OS and analyzes a frame received by the communication module 220 to detect presence or absence of an abnormality concerning synchronization processing performed between the master 10 and the one or more slaves 20, the synchronization processing being executed based on reference time distributed in the industrial network.

The extraction unit 140 operates on the non-real time OS and, when occurrence of an abnormality in the master 10 or the one or more slaves 20 has been detected by the first detection unit 130, extracts, out of the log accumulation DB 151, log data of frames until a predetermined time before (a second time before) time when the occurrence of the abnormality was detected. The extraction unit 140 stores the extracted log data of the frame in the second storage unit 300 as pre-failure log data 320. In other words, the second storage unit 300 stores, as the pre-failure log data 320, the log data extracted by the extraction unit 140

The slave processing unit 210 performs various kinds of processing for the monitoring device 30 to operate as the slave 20.

The communication module 220 operates on the real time OS 200, captures a frame flowing in the industrial network, and stores the frame in the third storage unit 221. The communication module 220 acquires data addressed to the communication module 220 and stores the data in the third storage unit 221 according to an instruction of a command included in the frame flowing in the industrial network. The communication module 220 acquires, from the third storage unit 221, data to be transmitted to the master 10 and stores the data in the frame according to the instruction of the command included in the frame flowing in the industrial network. As described above, the monitoring device 30 operates as the slave 20 at the terminal end. That is, the third storage unit 221 corresponds to the memory of the slave 20 described in "(Frame structure used in the industrial network)". For example, when the command included in the frame is FPWR and an address included in the frame indicates the monitoring device 30, the communication module 220 stores a value included in the frame in, in the third storage unit 221, a region designated by the address included in the frame. When the command included in the frame is FPRD and an address included in the frame indicates the monitoring device 30, the communication module 220 acquires a value from, in the third storage unit 221, a region designated by the address included in the frame and stores the value in the frame.

The periodic processing unit 230 operates on the real time OS 200. The periodic processing unit 230 repeatedly performs, at a predetermined period (for example, a period of a frame being transmitted from the master 10), processing of acquiring, from the third storage unit 221, a frame flowing in the industrial network and storing the frame in the FIFO queue 310. The periodic processing unit 230 acquires, from the pre-failure log data 320, data to be stored in the frame and stores the data in the third storage unit 221.

The second detection unit 231 analyzes the frame captured by the communication module 220 to detect presence or absence of an abnormality concerning the synchronization processing performed between the master 10 and the one or more slaves 20, the synchronization processing being executed based on the reference time distributed in the industrial network. Note that it is assumed that the monitoring device 30 includes at least one of the first detection unit 130 and the second detection unit 231. That is, the monitoring device 30 may detect presence or absence of an abnormality of the synchronization processing on the non-real time OS 100 side (that is, in the first detection unit 130) or may detect presence or absence of an abnormality of the synchronization processing on the real time OS 200 side (that is, in the second detection unit 231). The first detection unit 130 and the second detection unit 231 may be called "abnormality detection unit".

The communication module 220 may be called "transmission unit" and "reception unit". The communication module 220 (the reception unit) receives a frame repeatedly transmitted from the master 10 in the industrial network. The communication module 220 (the transmission unit) transmits the pre-failure log data 320 to the master 10 via the industrial network in response to a request from the master 10.

<Processing procedure>

(Detection of a synchronization processing abnormality)

Subsequently, processing of the monitoring device 30 detecting occurrence of an abnormality in the synchronization processing is specifically described. The following description is based on the premise that a synchronization processing abnormality is detected by the first detection unit 130. However, as described above, the synchronization processing abnormality can also be detected by the second detection unit 231. In the following description, it is assumed that the slave 20 and the monitoring device 30 are different devices.

The monitoring device 30 detects synchronization processing abnormalities of two patterns of a synchronization abnormality A and a synchronization abnormality B described below and determines a cause of occurrence of the synchronization processing abnormalities based on a combination of the synchronization processing abnormalities of the two patterns. Note that the synchronization abnormality A and the synchronization abnormality B may be respectively called "first abnormality" and "second abnormality".

Synchronization abnormality A: A case in which reference time stored in a reference time frame is not included in time when the reference time frame should be received and continuous two synchronization signals are generated

Synchronization abnormality B: A case in which a difference between reference times included in respective continuous two time synchronization frames and a difference between times when the monitoring device 30 received the respective continuous two time synchronization frames deviate.

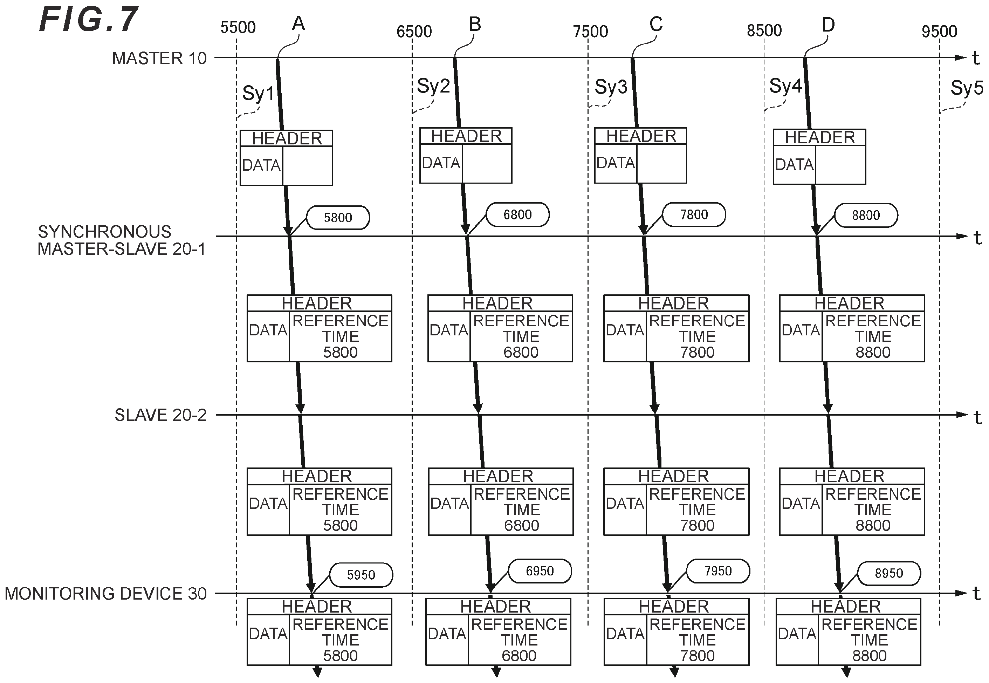

Figure 7 is a diagram illustrating a state in which the synchronization processing is normally operating. Processing of detecting the synchronization abnormality A and the synchronization abnormality B is specifically described with reference to Figure 7.

[Synchronization abnormality A]

In Figure 7, a horizontal axis t represents time when a synchronization signal is generated. The time when a synchronization signal is generated may be expressed in any way and is expressed by, for example, a numerical value of 32 bits or 64 bits staring from 0:00, January 1, 2000. A minimum unit of the time may be 1 nanosecond.

In an example illustrated in Figure 7, it is assumed that a synchronization signal period is set to 1000 (for example, 1 ms) and frames are reference time frames. The slave 20-1 is a synchronous master-slave and is described as synchronous master-slave 20-1 in the following description. That is, the synchronous master-slave 20-1 stores reference time in a reference time frame received from the master 10 and transmits the reference time frame to the slave 20-2. The slave 20-2 acquires the reference time from the received reference time frame and transmits the reference time frame to the monitoring device 30. The monitoring device 30 also acquires the reference time from the received reference time frame and transmits the reference time frame to the master 10.

The reference time frame is repeatedly transmitted from the master 10 at substantially the same period as the synchronization signal period. For example, a reference time frame A is transmitted from the master 10 from when a synchronization signal Sy1 is generated until when a synchronization signal Sy2 is generated, passes through the slave 20-1, the slave 20-2, and the monitoring device 30, and returns to the master 10 before the synchronization signal Sy2 is generated. Therefore, when the synchronization processing is normal, the slave 20 and the monitoring device 30 always receive one reference time frame between continuous two synchronization signals.

Time when a synchronization signal is generated first is time designated as "start time of a synchronization signal" and second and subsequent synchronization signals are generated every time the "synchronization signal period" elapses. That is, time when N-th (N is an integer equal to or larger than 1) synchronization signal is generated can be calculated using a formula of "start time of a synchronization signal+((N-1)×synchronization signal period". Then, it can be said that a frame transmitted N-th after the synchronization processing is started should be received by the slaves 20 between "start time of a synchronization signal+(N-1)×synchronization signal period" and "start time of a synchronization signal+N×synchronization signal period".

Here, the synchronous master-slave 20-1 stores, in a reference time frame received from the master 10, as reference time, time of a local clock of the synchronous master-slave 20-1 itself and transmits the reference time frame to the slave 20-2. Note that, as described above, a value of the local clock stored as the reference time by the synchronous master-slave 20-1 only has to be a time period from when the synchronous master-slave 20-1 receives a frame until when the synchronous master-slave 20-1 transmits the frame in which the reference time is stored to the slave 20-2. Thus, the first detection unit 130 detects presence or absence of an abnormality of the synchronization abnormality A by determining, for a reference time frame among frames repeatedly transmitted from the master 10, whether reference time is present during time when the reference time frame should be received and continuous two synchronization signals are generated.

More specifically, when reference time is present during time when the reference time frame should be received by the one or more slaves 20 (or the synchronous master-slaves) and continuous two synchronization signals are generated in the one or more slaves 20 (or the synchronous master-slaves), the first detection unit 130 determines that the synchronization abnormality A has not occurred. When reference time is absent during time when the reference time frame should be received by the one or more slaves 20 (or the synchronous master-slaves) and continuous two synchronization signals are generated in the one or more slaves 20 (or the synchronous master-slaves), the first detection unit 130 determines that the synchronization abnormality A has occurred.

The first detection unit 130 may acquire the "start time of a synchronization signal" and the "synchronization signal period" and calculate (estimate), based on the acquired "start time of a synchronization signal" and "synchronization signal period", the time when the reference time frame should be received and the continuous two synchronization signals are generated. For example, it is assumed that the reference time frame is a frame transmitted X-th after the start time of a synchronization signal. In this case, the first detection unit 130 can calculate (estimate), using a formula of "start time of a synchronization signal+(X-1)×synchronization signal period", time when the reference time frame should be received and a first synchronization signal of the continuous two synchronization signals is generated. The first detection unit 130 can calculate (estimate), using a formula of "start time of a synchronization signal+X×synchronization signal period", time when the reference time frame should be received and a second synchronization signal of the continuous two synchronization signals is generated.

As described below, the synchronization abnormality A is detected when the master 10 cannot transmit frames at equal intervals because of, for example, a failure of the local clock in the master 10 or when the local clock of the synchronous master-slave has failed and a shift has occurred in reference time stored in the reference time frame.

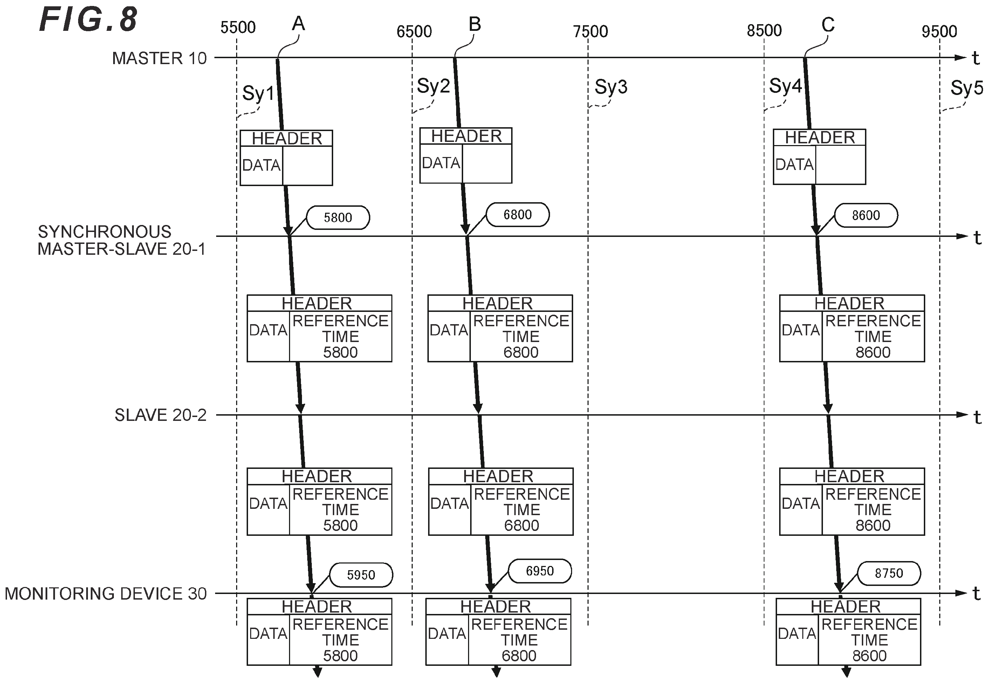

Figure 8 is a diagram for explaining an event that occurs when an abnormality has occurred in the master 10 and frames cannot be transmitted at equal intervals. Points not particularly referred to may be the same as the points illustrated in Figure 7. In an example illustrated in Figure 8, some abnormality has occurred in the master 10 and timing when a reference time frame C is transmitted from the master 10 has delayed. In this case, reference time stored in the reference time frame C is time when the synchronous master-slave 20-1 received the reference time frame C (8600). However, time when the reference time frame C should be received by the slaves 20 is between time when a synchronization signal Sy3 is generated (7500) and time when a synchronization signal Sy4 is generated (8500). Therefore, when the reference time frame C is received, the first detection unit 130 determines that the reference time (8600) included in the reference time frame C is absent in a period in which the reference time frame C should be received (between the time when the synchronization signal Sy3 is generated (7500) and the time when the synchronization signal Sy4 is generated (8500)) and detects occurrence of the synchronization abnormality A.

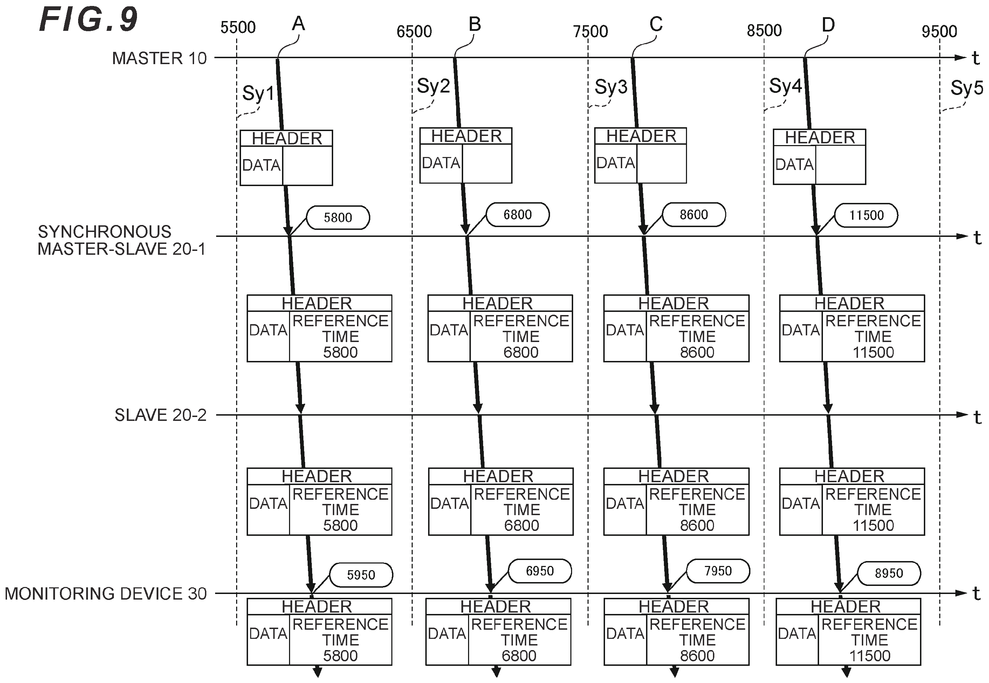

Figure 9 is a diagram for explaining an event in which an abnormality has occurred in the local clock of the synchronous master-slave and a shift occurs in reference time. Points not particularly referred to may be the same as the points illustrated in Figure 7. In an example illustrated in Figure 9, as a result of time ticked by the local clock of the synchronous master-slave 20-1 becoming earlier than actual time, reference times stored in a frame C and a frame D are not actual times (7800 and 8800 illustrated in Figure 7) but shift to 8600 and 11500, respectively. Therefore, when the reference time frame C is received, the first detection unit 130 determines that the reference time (8600) included in the reference time frame C is absent in the period in which the reference time frame C should be received (between the time when the synchronization signal Sy3 is generated (7500) and the time when the synchronization signal Sy4 is generated (8500)) and detects occurrence of the synchronization abnormality A.

[Synchronization abnormality B]

When the local clock of the synchronous master-slave 20-1 is normal (that is, when reference time stored in the reference time frame by the synchronous master-slave 20-1 is normal) and the local clock of the monitoring device 30 is also normal, a difference between times when the monitoring device 30 received continuous two reference time frames and a difference between reference times included in the two reference time frames should be substantially the same value. For example, in the example illustrated in Figure 7, a difference (1000) between time when the monitoring device 30 received the frame A (5950) and time when the monitoring device 30 received the frame B (6950) and a difference (1000) between reference time of the frame B (6800) and reference time of the frame A (5800) are the same.

Thus, the first detection unit 130 detects presence or absence of an abnormality concerning the synchronization processing based on a difference between times when the monitoring device 30 received respective continuous two reference time frames including reference times and a difference between the reference times included in the respective continuous two reference time frames. More specifically, when a "shift degree" of the difference between the times when the respective continuous two reference time frames were received and the difference between the reference times included in the respective continuous two reference time frames is equal to or smaller than a predetermined value, the first detection unit 130 determines that the synchronization abnormality B has not occurred. When the "shift degree" of the difference between the times when the respective continuous two reference time frames were received and the difference between the reference times included in the respective continuous two reference time frames exceeds the predetermined value, the first detection unit 130 determines that the synchronization abnormality B has occurred. A method of calculating the shift degree is described below.

As described below, the synchronization abnormality B is detected when the local clock of the synchronous master-slave 20-1 has failed and a shift has occurred in reference time stored in the reference time frame or when, because of, for example, a failure of the local clock of the monitoring device 30, the monitoring device 30 cannot correctly measure time when a frame was received.

In an example illustrated in Figure 9, as a result of time ticked by the local clock of the synchronous master-slave 20-1 becoming earlier than actual time, reference times stored in the frame C and the frame D are not actual times (7800 and 8800 illustrated in Figure 7) but shift to 8600. Therefore, the first detection unit 130 determines that a shift degree of a difference (1000) between time when the frame B was received (6950) and time when the frame C was received (7950) and a difference (1800) between reference time stored in the frame B (6800) and reference time stored in the frame C (8600) exceeds a predetermined value (for example, 0.1) and detects occurrence of the synchronization abnormality B.

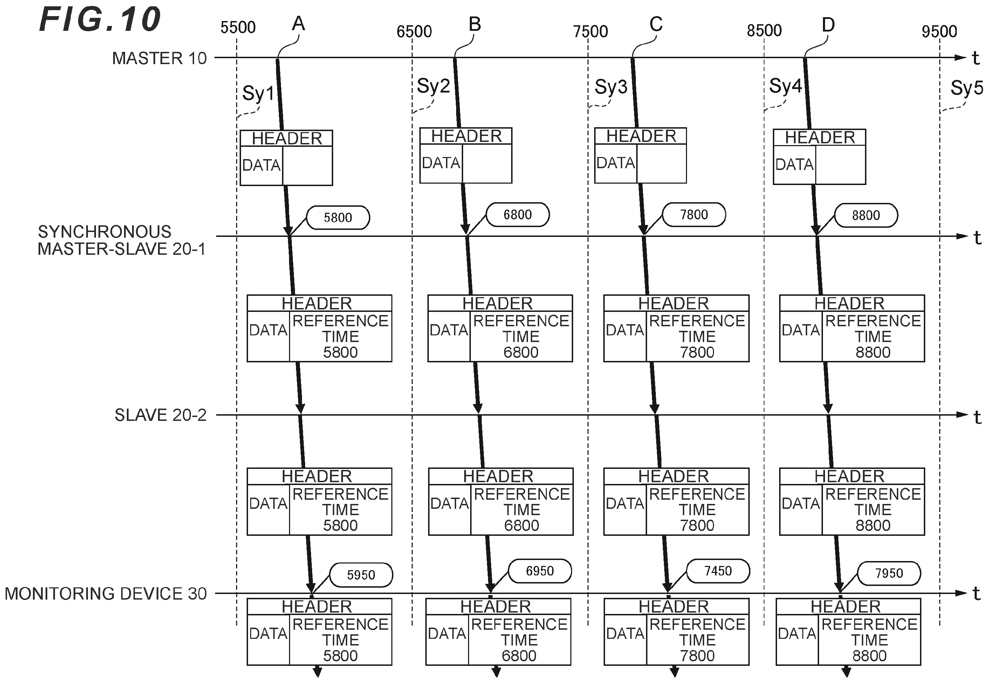

Figure 10 is a diagram for explaining an event that occurs when an abnormality has occurred in the local clock of the monitoring device 30. Points not particularly referred to may be the same as the points illustrated in Figure 7. In an example illustrated in Figure 10, as a result of time ticked by the local clock of the monitoring device 30 becoming later than actual time, times when the frame C and frame D were received are not actual times (7950 and 8950 illustrated in Figure 7) but shift to 7450 and 7950, respectively. Therefore, the first detection unit 130 determines that a shift degree of a difference (500) between time when the frame B was received (6950) and time when the frame C was received (7450) and the difference (1000) between the reference time stored in the frame B (6800) and the reference time stored in the frame C (7800) exceeds the predetermined value (for example, 0.1) and detects occurrence of the synchronization abnormality B.

As described above, as causes of occurrence of a synchronization abnormality, three causes of a case in which an abnormality has occurred in the master 10 and frames cannot be transmitted at equal intervals, a case in which the local lock of the synchronous master-slave 20-1 fails and a shift has occurred in reference time stored in a reference time frame, and a case in which an abnormality has occurred in the local clock of the monitoring device 30 are conceivable. The pattern in which an abnormality is detected, either the synchronization abnormality A or the synchronization abnormality B, is different for each of the causes.

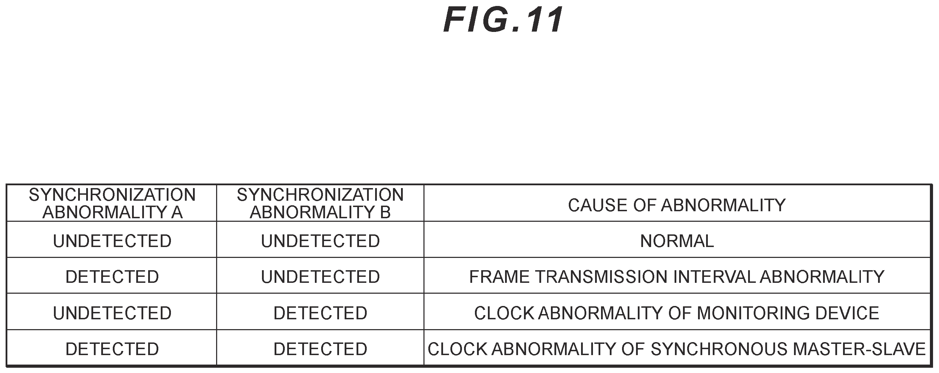

This relation is tabulated as illustrated in Figure 11. Figure 11 is a diagram illustrating a relation between combinations of synchronization processing abnormalities and causes of occurrence of the synchronization processing abnormalities. The first detection unit 130 determines a cause of an abnormality based on the relation illustrated in Figure 11. Specifically, when the synchronization abnormality A has occurred and the synchronization abnormality B has not occurred, the first detection unit 130 determines that there is an abnormality in a transmission period of a frame repeatedly transmitted from the master 10. When the synchronization abnormality A has not occurred and the synchronization abnormality B has occurred, the first detection unit 130 determines that there is an abnormality in a clock included in the monitoring device 30. When both of the synchronization abnormality A and the synchronization abnormality B have occurred, the first detection unit 130 determines that there is an abnormality in a clock of the synchronous master-slave.

(Detection procedure for a synchronization processing abnormality)

Reference signal frame

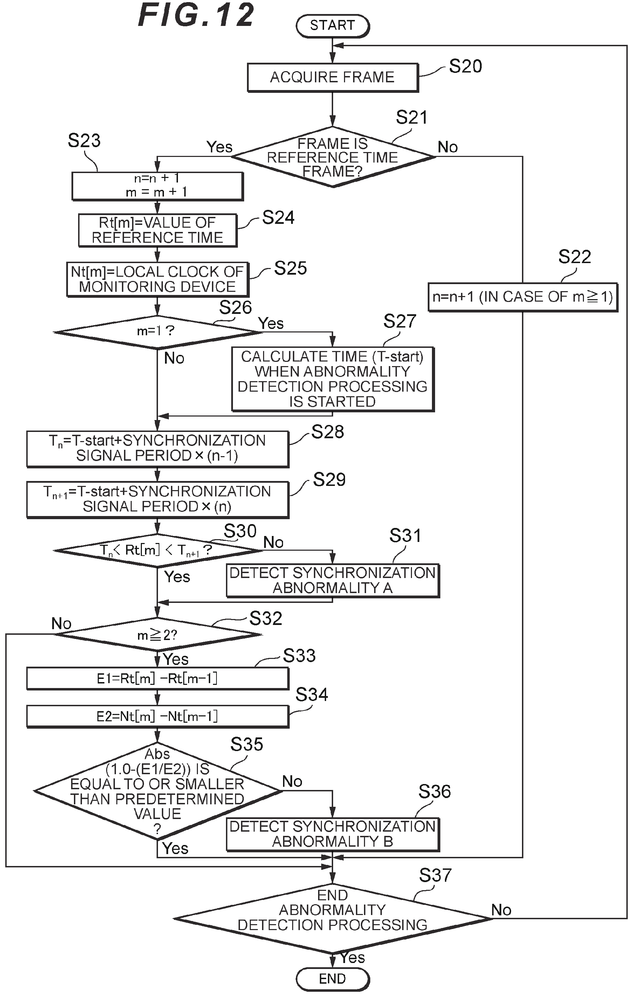

Figure 12 is a flowchart illustrating an example of a processing procedure of detecting a synchronization processing abnormality. In description referring to Figure 12, it is assumed that the master 10 repeatedly transmits a frame according to a synchronization signal period. "Frame" means both of a reference time frame and a frame other than the reference time frame (that is, a frame not including reference time). Before starting an operation that the control system 1 should perform such as motion control, the control system 1 performs initialization processing for, for example, distribution of setting of various data used for the motion control or the like. When the initialization processing is completed, the control system 1 transitions to a state in which the control system 1 can start an operation (referred to as "Operational State)"). It is assumed that, before transitioning to the operational state, the monitoring device 30 has acquired "start time of a synchronization signal" and a "synchronization signal period" in advance. Note that T-init used in the following description means "start time of a synchronization signal". A counter m is an integer equal to or larger than 1 and represents a cumulative number of times of the monitoring device 30 received reference time frames. A counter n is an integer equal to or larger than 1 and represents a cumulative number of times of the monitoring device 30 received frames (however, a first reference time frame is represented as a first frame and a frame received before the reference time frame is not counted). It is assumed that initial values of the counters n and m are 0.

In step S20, the first detection unit 130 acquires one frame from the log accumulation DB 151.

In step S21, when the frame is a reference time frame, the first detection unit 130 proceeds to a processing procedure in step S22. When the frame is not a reference time frame, the first detection unit 130 proceeds to a processing procedure in step S23.

In step S22, when the counter m is 1 or more, the first detection unit 130 adds 1 to the counter n and proceeds to a processing procedure in step S37. When the counter m is 0, the first detection unit 130 performs nothing and proceeds to a processing procedure in step S37.

In step S23, the first detection unit 130 adds 1 to the counters n and m.

In step S24, the first detection unit 130 stores a value of reference time included in the reference time frame in a variable Rt[m].

In step S25, the first detection unit 130 stores, in a variable Nt[m], time when the communication module 220 received the reference time frame (a value of a clock of the monitoring device 30).

In step S26, in the case of m=1, the first detection unit 130 proceeds to a processing procedure in step S27 and, in the case of not m=1, the first detection unit 130 proceeds to a processing procedure in step S28.

In step S27, the first detection unit 130 calculates time when the monitoring device 30 starts abnormality detection processing (hereinafter referred to as "abnormality detection start time") (T-start). Note that the abnormality detection start time (T-start) can be calculated using the following Expression (1). Note that X is an integer equal to or larger than 0.

: Largest T-start satisfying T-start<variable Rt[1] when T-start=T-int+(synchronization signal peri-     Expression (1)
od×X)

In step S28, the first detection unit 130 calculates a variable $T_n$ using the following Expression (2).

$$\text{Expression (2): } T_n = T\text{-start} + \text{synchronization signal period} \times (n-1)$$

In step S29, the first detection unit 130 calculates a variable $T_{n+1}$ using the following Expression (3).

$$\text{Expression (3): } T_{n+1} = T\text{-start} + \text{synchronization signal period} \times (n)$$

In step S30, the first detection unit 130 proceeds to a processing procedure in step S31 when the following Expression (4) is satisfied and proceeds to a processing procedure in step S32 when the following Expression (4) is not satisfied.

$$\text{Expression (4): } T_n < Rt[m] < T_{n+1}$$

In step S31, the first detection unit 130 determines that the synchronization abnormality A has been detected.

In step S32, the first detection unit 130 proceeds to a processing procedure in step S33 when the counter m is 2 or more and proceeds to a processing procedure in step S37 when the counter m is 1.

In step S33, the first detection unit 130 calculates a variable E1 using the following Expression (5).

$$\text{Expression (5): } E1 = Rt[m] - Rt[m-1]$$

In step S34, the first detection unit 130 calculates a variable E2 using the following Expression (6).

$$\text{Expression (6): } E2 = Nt[m] - Nt[m-1]$$

In step S35, the first detection unit 130 calculates a shift degree using the following Expression (7) and proceeds to a processing procedure in step S36 when the shift degree exceeds a predetermined value and proceeds to a processing procedure in step S37 when the shift degree is equal to or smaller than the predetermined value. Note that Abs in Expression (7) means an absolute value.

$$\text{Expression (7): Shift degree} = Abs(1.0 - (E1/E2))$$

In step S36, the first detection unit 130 determines that the synchronization abnormality B has been detected.

In step S37, the first detection unit 130 returns to step S20 when the abnormality detection processing is not ended and ends the processing illustrated in Figure 12 when the abnormality detection processing is ended.

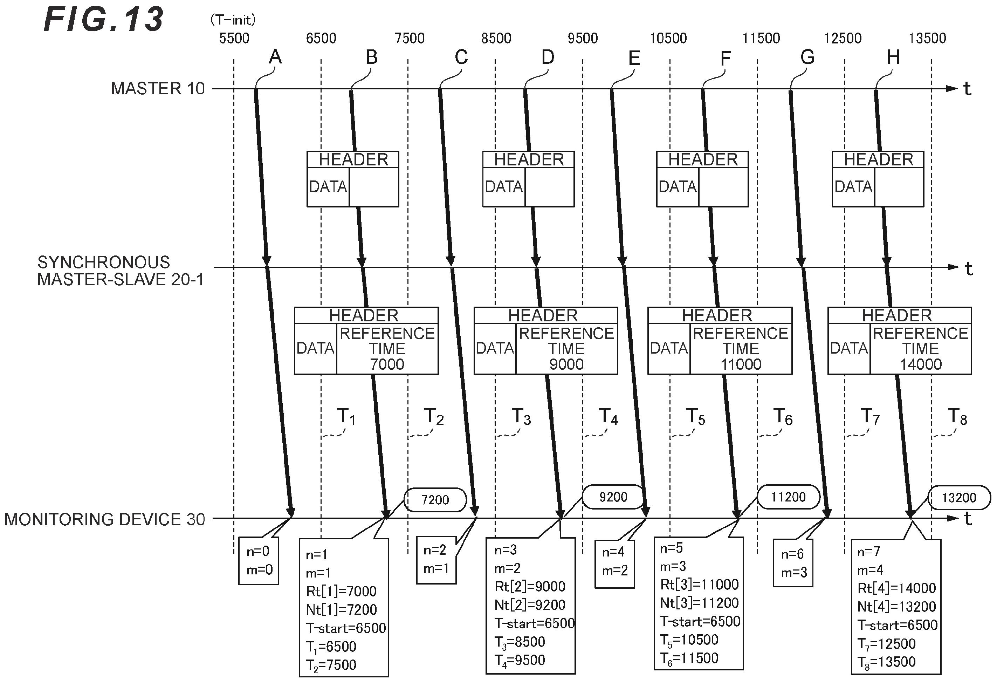

An example in which a clock abnormality of the synchronous master-slave is detected as one of synchronization abnormalities by executing the processing procedure described above is specifically described with reference to Figure 13.

Figure 13 is a diagram illustrating a specific example of synchronization abnormality detection processing. In the example illustrated in Figure 13, it is assumed that start time (T-init) of a synchronization signal is 5500 (time in the case in which reference time starts from 0) and a synchronization signal period is 1000 (for example, 1 ms). It is assumed that reference times stored in reference time frames B, D, E, and H are respectively 7000, 9000, 11000, and 14000.

Processing of the monitoring device 30 detecting a synchronization abnormality is described below with reference to Figure 12 and Figure 13 assuming a case in which an abnormality has occurred in the local clock of the synchronous master-slave. Note that it is assumed that the predetermined value in the processing procedure in step S35 in Figure 12 is 0.1.

First, the first detection unit 130 acquires the frame A (S20, S21-NO, S22, and S37-NO in Figure 12). Subsequently, the first detection unit 130 acquires the reference time frame B and adds 1 respectively to the counters n and m (S20, S21-YES, and S23 in Figure 12). The first detection unit 130 stores, in a variable Rt[1], a value 7000 of reference time included in the reference time frame B, stores, in a variable Nt[1], time 7200 when the communication module 220 received the reference time frame B, and calculates the variable T-start according to Expression (1) (S24, S25, S26-YES, and S27 in Figure 12).

Here, in Expression (1), T-start in the case of X=1 is T-start=5500+1000=6500 and satisfies T-start<7000. Subsequently, T-start in the case of X=2 is T-start=5500+1000×2=7500 and does not satisfy T-start<7000. Therefore, a value of T-start is 6500.

Subsequently, the first detection unit 130 calculates the variable $T_n$ and the variable $T_{n+1}$ according to Expression (2) and Expression (3) (S28 and S29 in Figure 12). Since n=1 at this point in time, $T_n$ is 6500+1000×(1-1)=6500. Similarly, $T_{n+1}$ is 6500+1000×1=7500.

The first detection unit 130 determines whether Expression (4) is satisfied. Since m=1 and Rt[1] is 7000 at this point in time, 6500<Rt[1]<7500 is satisfied (S30 in Figure 12). Therefore, the first detection unit 130 determines that the synchronization abnormality A has not occurred. Subsequently, since m=1, the first detection unit 130 skips the processing procedures in step S33 to step S36 in Figure 12 (S32-NO).

Subsequently, the first detection unit 130 receives the frame C and adds 1 to n (S20, S21-NO, and S22 in Figure 12). At this point in time, n=2 and m=1.

Subsequently, the first detection unit 130 acquires the reference time frame D and adds 1 respectively to the counters n and m (S20, S21-YES, and S23 in Figure 12). The first detection unit 130 stores, in a variable Rt[2], a value 9000 of reference time included in the reference time frame D and stores, in a variable Nt[2], time 9200 when the communication module 220 received the reference time frame D (S24 and S25 in Figure 12).

Subsequently, the first detection unit 130 calculates the variable $T_n$ and the variable $T_{n+1}$ according to Expression (2) and Expression (3) (S28 and S29 in Figure 12). Since n=3 at this point in time, $T_n$ is 6500+1000×(3-1)=8500. Similarly, $T_{n+1}$ is 6500+1000×3=9500.

The first detection unit 130 determines whether Expression (4) is satisfied. Since m=2 and Rt[2] is 9000 at this point in time, 8500<Rt[2]<9500 is satisfied (S30-YES in Figure 12). Therefore, the first detection unit 130 determines that the synchronization abnormality A has not occurred. The first detection unit 130 calculates E1 and E2 according to Expression (5) and Expression (6) (S32-YES, S33, and S34 in Figure 12). E1 is Rt[2]-Rt[1]=9000-7000=2000 and E2 is Nt[2]-Nt[1]=9200-7200=2000. The first detection unit 130 determines whether Expression (7) is satisfied (S35 in Figure 12). Since Abs(1.0-E2/E1)=1.0-2000/2000=0, which is equal to or smaller than a predetermined value 100, the first detection unit 130 determines that the synchronization abnormality B has not occurred (S35-YES in Figure 12).

Subsequently, the first detection unit 130 receives a frame E and adds 1 to n (S20, S21-NO, and S22 in Figure 9). At this point in time, n=4 and m=2.

Subsequently, the first detection unit 130 acquires a reference time frame F, adds 1 to the counter n and the counter m, stores, in a variable Rt[3], a value 11000 of reference time included in the reference time frame F, stores, in a variable Nt[3], time 11200 when the communication module 220 received the reference time frame F, and calculates the variable $T_n$ and the variable $T_{n+1}$ according to Expression (2) and Expression (3) (S23, S24, S25, S26-NO, S28, and S29 in Figure 12). Since n=5 at this point in time, $T_n$ is 6500+1000×(5-1)=10500. Similarly, $T_{n+1}$ is 6500+1000×5=11500.

The first detection unit 130 determines whether Expression (4) is satisfied. At this point, since m=3 and Rt[3] is 11000, 10500<Rt[3]<11500 is satisfied (S30-NO in Figure 12). Therefore, the first detection unit 130 determines that the synchronization abnormality A has not occurred. The first detection unit 130 calculates E1 and E2 according to Expression (5) and Expression (6) (S33 and S34 in Figure 12). E1 is Rt[3]-Rt[3]=11000-9000=2000 and E2 is Nt[3]-Nt[2]=11200-9200=2000. The first detection unit 130 determines whether Expression (7) is satisfied (S35 in Figure 12). Since Abs(1.0-E2/E1)=1.0-2000/2000=0, which is equal to or smaller than the predetermined value 100, the first detection unit 130 determines that the synchronization abnormality B has not occurred (S35-NO in Figure 12).

Subsequently, the first detection unit 130 receives a frame G and adds 1 to n (S22 in Figure 12). At this point in time, n=6 and m=3.

Subsequently, the first detection unit 130 acquires a reference time frame H and adds 1 to the counter n and the counter m (S20, S21-YES, and S23 in Figure 12). The first detection unit 130 stores, in a variable Rt[4], a value 14000 of reference time included in the reference time frame H, stores, in a variable Nt[4], time 13200 when the communication module 220 received the reference time frame H, and calculates the variable $T_n$ and the variable $T_{n+1}$ according to Expression (2) and Expression (3) (S24, S25, S26-NO, S28, and S29 in Figure 12). Since n=7 at this point in time, $T_n$ is 6500+1000×(7-1)=12500. Similarly, $T_{n+1}$ is

$$6500+1000\times7=13500.$$

The first detection unit 130 determines whether Expression (4) is satisfied. At this point in time, since m=4 and Rt[4] is 14000, 12500<Rt[4]<13500 is not satisfied (S30-NO in Figure 12). Therefore, the first detection unit 130 determines that the synchronization abnormality A has occurred (S31 in Figure 12). The first detection unit 130 calculates E1 and E2 according to Expression (5) and Expression (6) (S33 and S34 in Figure 12). E1 is Rt[4]-Rt[3]=14000-11000=3000 and E2 is Nt[4]-Nt[3]=13200-11200=2000. The first detection unit 130 determines whether Expression (7) is satisfied (S35 in Figure 12). Since Abs(1.0-E2/E1)=Abs(1.0-3000/2000)=0.5, which is not equal to or smaller than the predetermined value 0.1, the first detection unit 130 determines whether the synchronization abnormality B has occurred (S35-NO and S36 in Figure 12).

As described above, the first detection unit 130 detects the synchronization abnormality A and the synchronization abnormality B and determines, according to the table of Figure 11, a clock of the synchronous master-slave 20-1 is abnormal.

[Modifications in the detection of a synchronization processing abnormality]

(Modification 1)

In the detection of a synchronization processing abnormality described above, the monitoring device 30 may execute only one detection of the detection of the synchronization abnormality A and the detection of the synchronization abnormality B.

(Modification 2)

In the log accumulation DB 151, contents of latest frames captured by the communication module 220 are sequentially stored in association with times when the monitoring device 30 (more specifically, the communication module 220) received the frames. Thus, the first detection unit 130 may successively analyze, according to the flowchart illustrated in Figure 12, the frames sequentially stored in the log accumulation DB 151 to quickly detect occurrence of a synchronization abnormality. Alternatively, the first detection unit 130 may analyze, with batch processing, according to the flowchart illustrated in Figure 12, frames accumulated in the log accumulation DB 151 in the past to detect occurrence of a synchronization abnormality afterward.

(Modification 3)

The clock of the monitoring device 30 does not always need to operate on the same time axis as the reference time. The clock of the monitoring device 30 may operate on a time axis different from the reference time.

(Modification 4)

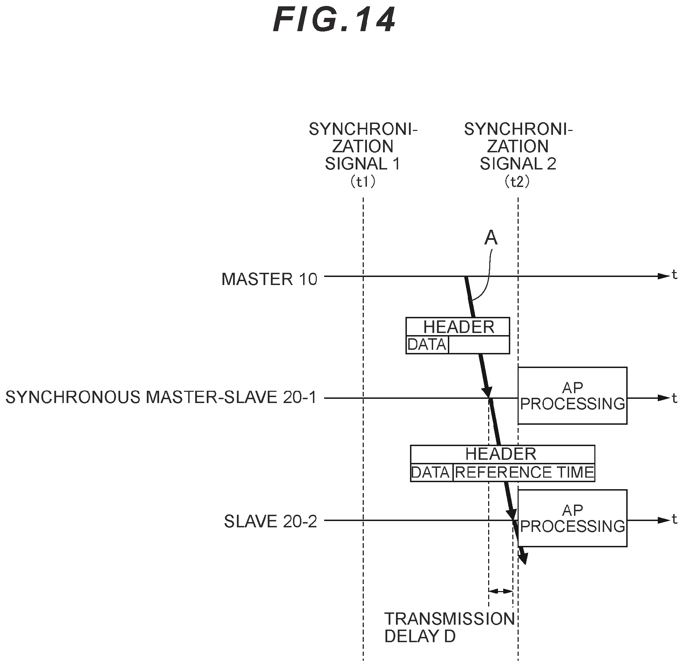

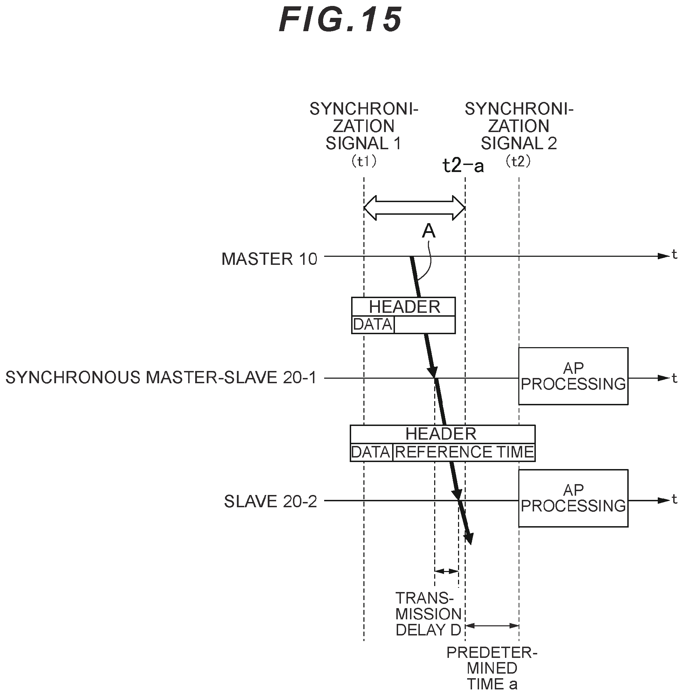

Figure 14 and Figure 15 are diagrams for explaining a modification. Since the industrial network processes a frame in an on-the-fly scheme, a time lag for a propagation delay occurs from when the frame arrives at the synchronous master-slave until when the frame arrives at the slave 20 that processes the frame last. It is considered that some time lag is necessary until the frame can be processed in the application unit after the frame arrives at the slave 20.

For example, in an example illustrated in Figure 14, the frame A arrives at the slave 20-2 immediately before time t2 when the synchronization signal 2 is generated. Therefore, it is considered difficult to start AP processing according to the time t2 even if the frame A is received at this time. Thus, the first detection unit 130 may detect presence or absence of an abnormality of the synchronization abnormality A considering the time lag.

For example, the detection unit 130 may detect presence or absence of an abnormality of the synchronization abnormality A by determining, for a reference time frame among frames repeatedly transmitted from the master 10, whether reference time is present between time (t1 in Figure 15) when the reference time frame should be received and a first synchronization signal 1 of continuous two synchronization signals was generated and time (t2-a in Figure 15) a predetermined time (a third time) before time (t2 in Figure 15) when a second synchronization signal 2 was generated. The predetermined time (the third time) may be set to a time longer than a total value of a propagation delay D between the synchronous master-slave and the slave 20 that processing the frame last and a processing delay time in the slave 20.

More specifically, when reference time is present between time when the reference time frame should be received by the one or more slaves 20 (or synchronous master-slaves) and a first synchronization signal of continuous two synchronization signals is generated in one or more slaves (or synchronous master-slaves) and time the predetermined time (the third time) before time when a second synchronization signal is generated in the one or more slaves, the first detection unit 130 may determine that the synchronization abnormality A has not occurred. When reference time is absent between the time when the reference time frame should be received by the one or more slaves 20 (or synchronous master-slaves) and the first synchronization signal of the continuous two synchronization signals is generated in the one or more slaves (or synchronous master-slaves) and the time the predetermined time (the third time) before the time when the second synchronization signal is generated in the one or more slaves (or synchronous master-slaves), the first detection unit 130 may determine that the synchronization abnormality A has occurred.

(Frame recording immediately before abnormality occurrence)

Subsequently, processing of, when an abnormality has occurred in the control system 1, extracting log data of a frame flowing in the industrial network before the abnormality occurrence and transmitting the extracted log data to the master 10 is described.

Here, content of data accumulated in the log accumulation DB 151 is described. A frame flowing in the industrial network and captured by the communication module 220 of the real time OS 200 is stored in the log accumulation DB 151. At this time, an identifier (a first identifier) for uniquely identifying a frame repeatedly transmitted from the master 10 may be included in data of the frame stored in the log accumulation DB 151. An identifier for uniquely identifying a frame is called "cycle number". The cycle number is a number managed by the master 10 and the monitoring device 30 and is not included in the frame. For example, the master 10 sets a cycle number of a frame transmitted first after transitioning to an operable state to 0 and increases the cycle number by one every time the master 10 transmits a frame. Similarly, the monitoring device 30 sets a cycle number of a frame received first after transitioning to the operable state to 0 and increases the cycle number by one every time the monitoring device 30 receives a frame.

The data of the frame stored in the log accumulation DB 151 may include an identifier (a second identifier) indicating a memory position of a write destination or a read destination for data (also called object) in a frame repeatedly transmitted from the master 10. The identifier indicating the memory position may be a combination of an identifier (a setting address) for identifying the slave 20, an index, and a subindex.

Similarly, the pre-failure log data 320 storing log data extracted from the log accumulation DB 151 may also include the cycle number and the identifier (the second identifier) indicating the memory position.

In other words, when a cycle number is designated, the monitoring device 30 can acquire, out of the pre-failure log data 320, data of a frame transmitted from the master with the designated cycle number. When a cycle number and an identifier indicating a memory position are designated, the monitoring device 30 can acquire, out of the pre-failure log data 320, data of a frame transmitted from the master with the designated cycle number, the data being data addressed to a specific memory of a specific slave 20 or data read from the specific memory of the specific slave 20 and stored in the frame.

When occurrence of an abnormality in the master 10 or the one or more slaves 20 is notified, the extraction unit 140 extracts, out of the log accumulation DB 151, log data until a predetermined time before (a first time before) time when the occurrence of the abnormality was detected. Note that the time when the occurrence of the abnormality was detected may be time when the monitoring device 30 detected the abnormality occurrence or may be time when the monitoring device 30 received a frame in which the abnormality occurrence was detected was received. The extraction unit 140 stores, as the pre-failure log data 320, the extracted log data in the second storage unit 300 that can be referred to from the real time OS 200.

Here, the predetermined time (the first time) may be designated from the master 10 or may be stored in advance in the configuration file 152. The predetermined time may be expressed by a number of cycles (for example, 1000 cycles) or may be expressed by a specific time length (for example, one second). When the predetermined time is expressed by the number of cycles, the predetermined time may be called "designated number of cycles". Note that, since a time length of one cycle is the same as a synchronization signal period, the number of cycles and the time length can be converted to each other. Therefore, the predetermined time being expressed by the specific time length and the predetermined time being expressed by the number of cycles are synonymous.

When a frame repeatedly transmitted from the master 10 has not been successfully received for a fixed time (a second time), the second detection unit 231 may determine that an abnormality has occurred in the master 10. The fixed time may be called "WD (watchdog) timer". The WD timer may be designated from the master 10 or may be stored in advance in the configuration file 152. When detecting the synchronization abnormality A or the synchronization abnormality B described above, the monitoring device 30 may determine that an abnormality has occurred in the master 10 or the one or more slaves 20. The WD timer may be expressed by a number of cycles (for example, 100 cycles) or may be expressed by a specific time length (for example, 0.1 second). Note that, since the number of cycles and the time length can be converted to each other as described above, the WD timer being expressed by the specific time length and the WD timer being expressed by the number of cycles are synonymous.

The communication module 220 transmits log data stored in the pre-failure log data 320 to the master 10 via the industrial network in response to a request from the master 10. Specifically, the communication module 220 (the reception unit) receives, from the master 10, a transmission request for pre-failure log data including a number of cycles (a first identifier). When receiving the transmission request, the communication module 220 (the transmission unit) transmits data of a frame designated by the cycle number among the pre-failure log data to the master 10.

The communication module 220 (the reception unit) may receive, from the master 10, a transmission request for a pre-failure log data including a cycle number (a first identifier) and an identifier (a second identifier) indicating a memory position. When receiving the transmission request, the communication module 220 (the transmission unit) may transmit, to the master 10, among the pre-failure log data, data corresponding to the identifier indicating the memory position (that is, data written in a memory indicated by the identifier or data read from the memory indicated by the identifier) in a frame designated by the cycle number.

Note that, when receiving an instruction from the master 10, the slave processing unit 210 may delete the pre-failure log data 320. Specifically, the communication module 220 (the reception unit) may receive a deletion request for the pre-failure log data 320 from the master 10. When the deletion request is received, the second detection unit 231 may delete the pre-failure log data 320. Note that the second detection unit 231 may be called "deletion processing unit".

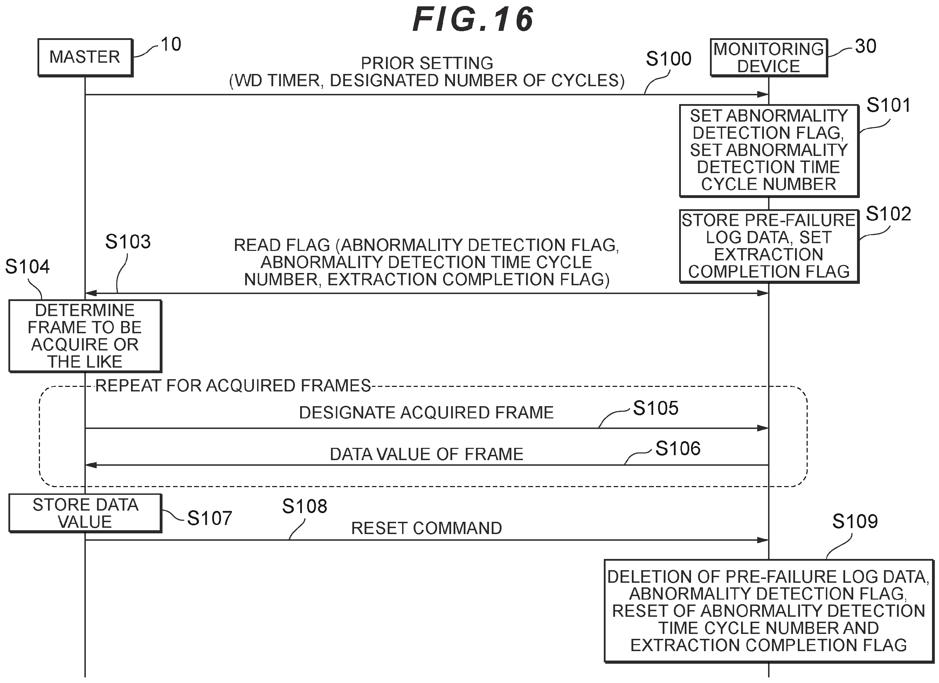

Figure 16 is a sequence diagram illustrating an example of a processing procedure in extracting log data and transmitting the log data to the master 10 when an abnormality has occurred.

In step S100, the master 10 transmits a frame including a WD timer and a designated number of cycles to write the WD timer and the designated number of cycles in a predetermined memory region in the third storage unit 221 of the monitoring device 30. The second detection unit 231 of the monitoring device 30 acquires the WD timer and the designated number of cycles written in the third storage unit 221 to recognize a value of the WD timer and the designated number of cycles.

After the processing procedure in step S100 has been completed, the control system 1 transitions to the operable state and the master 10 starts transmission of a frame.

In step S101, the second detection unit 231 detects abnormality occurrence. For example, when a frame has not been successfully received from the master 10 in a period set by the WD timer, the second detection unit 231 may detect abnormality occurrence. When detecting the abnormality occurrence, the second detection unit 231 stores, in the third storage unit 221, an "abnormality detection flag" indicating that an abnormality has been detected and an "abnormality detection time cycle number" indicating, when the abnormality has been detected, a cycle number of a frame received last. Note that the abnormality detection flag and the abnormality detection time cycle number are stored in the third storage unit 221 in order to enable the master 10 to recognize that an abnormality has occurred in the industrial network. The second detection unit 231 notifies the occurrence of the abnormality to the extraction unit 140. For example, the second detection unit 231 may store the abnormality detection flag and the abnormality detection time cycle number in the second storage unit 300. The extraction unit 140 may periodically refer to the second storage unit 300 to acquire the abnormality detection flag and the abnormality detection time cycle number.

In step S102, when the occurrence of the abnormality is notified from the second detection unit 231, the extraction unit 140 extracts, from the log accumulation DB 151, log data of frames up to the designated number of cycles before a cycle number at the time when the abnormality was detected and stores the log data in the pre-failure log data 320. The extraction unit 140 notifies the second detection unit 231 that the pre-failure log data 320 has been stored. For example, the extraction unit 140 may store, in the second storage unit 300, information indicating that the storage of the pre-failure log data 320 has been completed. The extraction unit 140 may periodically refer to the second storage unit 300 and check presence or absence of the information to recognize that the pre-failure log data 320 has been stored in the second storage unit 300.

When the pre-failure log data 320 has been stored in the second storage unit 300, the second detection unit 231 stores an extraction completion flag in the third storage unit 221. The extraction completion flag indicates that the extraction of the pre-failure log data 320 has been completed and the pre-failure log data 320 can be read from the master 10.

In step S103, the communication module 220 receives an instruction from the master 10 and stores the abnormality detection flag, the abnormality detection time cycle number, and the extraction completion flag in a frame and transmits the frame to the master 10. The master 10 reads the abnormality detection flag, the abnormality detection time cycle number, and the extraction completion flag from the received frame to recognize that the abnormality has been detected in the monitoring device 30, recognize the cycle number at the time when the abnormality occurred, and recognize that the pre-failure log data 320 can be read from the monitoring device 30. Note that the processing procedure in step S103 may be executed by, for example, an administrator who manages the master 10 operating a screen of the master 10.

In step S104, the master 10 determines, for example, a frame of which cycle number among cycles up to the designated number of cycles before the abnormality detection time cycle number is read, a frame addressed to which slave 20 is read, a value of which index and which subindex is read from the monitoring device 30. Note that the determination may be performed by the administrator or the like who manages the master 10 designating a cycle number or the like.

In step S105, in order to read data of the frame of the cycle number determined in the processing procedure in step S104, the master 10 transmits a frame including an identifier indicating the monitoring device 30, a cycle number of the frame to be read, an identifier (a setting address) of the slave 20 to be read, and an index and a subindex corresponding to the value to be read. Note that the identifier of the slave 20 to be read and the index and the subindex corresponding to the value to be read may be omitted. For example, when it is desired to acquire all data of a frame of a certain cycle number, the master 10 may designate only the cycle number and omit the identifier of the slave 20 to be read and the index and the subindex.

In step S106, the communication module 220 stores, in the frame received from the master 10 in the processing procedure in step S105, the data of the frame of the cycle number instructed from the master 10 in the processing procedure in step S105 and transmits the frame to the master 10. The master 10 acquires, from the received frame, the data of the frame of the designated cycle number. Note that, when reading data of frames of a plurality of cycles, the master 10 repeats the processing procedures in step S105 and step S106.

In step S107, the master 10 stores the acquired data of the frame.

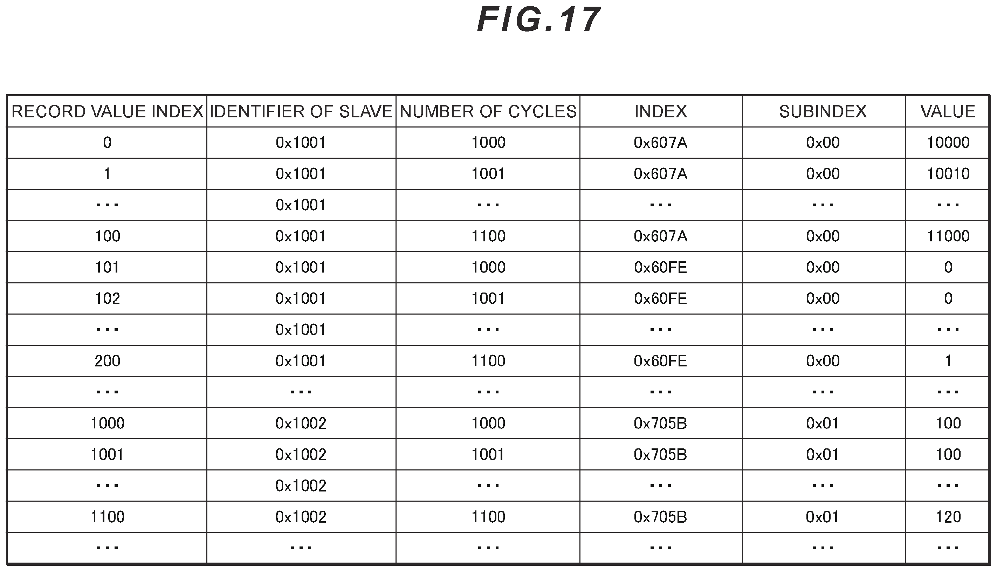

Figure 17 is a diagram illustrating an example of data of a frame stored in the pre-failure log data 320. A recording value index is an identifier for uniquely identifying a record recorded in the pre-failure log data 320. For example, when it is desired to acquire all values in frames, the numbers of cycles of which are 1000 to 1049, the master 10 repeats, fifty times, while increasing the number of cycles by one at a time, a procedure of designating the number of cycles 1000 in the processing procedure in step S105 and acquiring data of a frame, the number of cycles of which is 1000, in the processing procedure in step S106. Referring back to Figure 16 to continue the description.

Note that the frame used in the processing procedures in step S105 and step S106 may be the frame or may be a frame non-periodically transmitted irrelevantly to the synchronization processing.

In step S108, in order to erase the pre-failure log data 320 stored in the monitoring device 30, the master 10 transmits a frame including the identifier of the monitoring device 30, an index and a subindex indicating a memory region in which a reset command flag is stored, and a value of the reset command flag to write the reset command flag in a predetermined memory region in the third storage unit 221 of the monitoring device 30.

In step S109, when detecting that the reset command flag has been written in the third storage unit 221, the second detection unit 231 of the monitoring device 30 deletes the pre-failure log data 320. The second detection unit 231 deletes the abnormality detection flag, the abnormality detection time cycle number, and the extraction completion flag stored in the third storage unit 221.

<Summary>

According to the embodiment described above, it is possible to detect, earlier, an abnormality that occurs in the control system connected by the industrial network. When an abnormality has occurred in the control system connected by the industrial network, it is possible to more quickly perform an abnormality analysis and/or restoration.

Since the monitoring device 30 analyzes a frame transmitted from the master 10 at every generation period of a synchronization signal, it is possible to quickly detect occurrence of a synchronization abnormality before a generation period of the next synchronization signal comes.

The monitoring device 30 detects the abnormalities of the two patterns of the synchronization abnormality A and the synchronization abnormality B. Accordingly, the monitoring device 30 is capable of specifically specifying a cause at the time when a synchronization abnormality has occurred in the control system 1. Specifically, the monitoring device 30 is capable of specifying whether the clock of the monitoring device 30 itself is abnormal, there is an abnormality in a transmission period of a frame transmitted by the master 10, or whether there is an abnormality in the local clock of the synchronous master-slave.

When the monitoring device 30 is absent, even if a synchronization abnormality occurs, it has been difficult to identify whether an abnormality has occurred in the local clock of the master 10 or whether an abnormality has occurred in the local clock of the synchronous master-slave. On the other hand, in the present embodiment, since occurrence of a synchronization abnormality is monitored by the monitoring device 30 separately from the master 10, it is possible to specifically specify a cause of the synchronization abnormality.

The monitoring device 30 captures a frame transmitted from the master 10 and causes the log accumulation DB 151 on the non-real time OS 100 to store the frame. Since the log accumulation DB 151 is stored on the non-real time OS side that can treat a large amount of data, the monitoring device 30 is capable of capturing and storing data of a large number of frames.

When occurrence of an abnormality has been detected, the monitoring device 30 extracts, from the log accumulation DB 151, data of a frame immediately before the abnormality occurs and stores the extracted pre-failure log data 320 on a memory that can be referred to from the real time OS 200. Since it is difficult for the non-real time OS to perform real time processing, it is impossible to acquire the pre-failure log data 320 according to a period of a frame and write the pre-failure log data 320 in the frame. However, since the pre-failure log data 320 can be referred to from the real time OS 200, the monitoring device 30 is capable of acquiring the pre-failure log data 320 according to a synchronization signal period and writing the pre-failure log data 320 in the frame. In other words, the master 10 is capable of reading the pre-failure log data 320 using a frame repeatedly transmitted according to the synchronization signal period.

By reading the pre-failure log data 320, the master 10 can specify a position where motion control stopped and, after restoration from the abnormality, is capable of continuing the motion control from the position where the motion control stopped.

The monitoring device 30 transmits the pre-failure log data 320 via the industrial network. Accordingly, even when an external input such as a USB is difficult for the master 10 used in the control system 1, the monitoring device 30 is capable of easily transmitting the pre-failure log data 320 to the master 10.

The embodiment described above is for facilitating understanding of the present disclosure and is not for limitedly interpreting the present disclosure. The flowcharts, the sequences, and the elements included in the embodiment and the dispositions, the materials, the conditions, the shapes, the sizes, and the like of the elements described in the embodiment are not limited to the exemplified ones and can be changed as appropriate. Components described in different embodiments can be partially substituted or combined.

**Reference Signs List**

1 control system, 10 master, 11 processor, 12 storage device, 13 network IF, 14 input device, 15 output device, 20 slave, 30 monitoring device, 110 display unit, 120 collection unit, 130 first detection unit, 140 extraction unit, 150 first storage unit, 151 log accumulation DB, 152 configuration file, 210 slave processing unit, 220 communication module, 221 third storage unit, 230 periodic processing unit, 231 second detection unit, 300 second storage unit, 310 FIFO queue, 320 pre-failure log data

**Claims**

1. An information processing device connected to a master and one or more slaves via an industrial network, the information processing device comprising:

   a reception unit that receives a frame repeatedly transmitted from the master in the industrial network;
   a first storage unit that stores log data of the frame;
   an extraction unit that, when occurrence of an abnormality in the master or the one or more slaves has been detected, extracts, from the first storage unit, log data of the frame until a predetermined time before time when the occurrence of the abnormality was detected;
   a second storage unit that stores the extracted log data of the frame as pre-failure log data; and
   a transmission unit that transmits the pre-failure log data to the master via the industrial network in response to a request from the master.

2. The information processing device according to claim 1, wherein

   the information processing device includes a non-real time OS and a real time OS,
   the reception unit operates on the real time OS,
   the first storage unit is provided in the non-real time OS,
   the extraction unit operates on the non-real time OS,
   the second storage unit is provided in the memory that can be referred to from the real time OS and the real time OS, and
   the transmission unit operates on the real time OS.

3. The information processing device according to claim 1, wherein

the log data of the frame includes a first identifier for uniquely identifying the frame repeatedly transmitted from the master,

the reception unit receives, from the master, a transmission request for the pre-failure log data including the first identifier, and

when receiving the transmission request, the transmission unit transmits data of the frame designated by the first identifier among the pre-failure log data to the master.

4. The information processing device according to claim 3, wherein

the log data of the frame further includes a second identifier indicating a memory position correlated with data stored in the frame repeatedly transmitted from the master,

the reception unit receives, from the master, a transmission request for the pre-failure log data including the first identifier and the second identifier, and

when receiving the transmission request, the transmission unit transmits, among the pre-failure log data, data corresponding to the second identifier of the frame designated by the first identifier to the master.

5. The information processing device according to claim 1, wherein

the reception unit receives a deletion request for the pre-failure log data from the master, and

the information processing device comprises a deletion processing unit that deletes the pre-failure log data when the deletion request is received.

6. An information processing method executed by an information processing device connected to a master and one or more slaves via an industrial network, the information processing method comprising:

a step of receiving a frame repeatedly transmitted from the master in the industrial network;

a step of causing a first storage unit to store log data of the frame;

a step of, when occurrence of an abnormality in the master or the one or more slaves has been detected, extracting, from the first storage unit, log data of the frame until a predetermined time before time when the occurrence of the abnormality was detected;

a step of causing a second storage unit to store the extracted log data of the frame as pre-failure log data; and

a step of transmitting the pre-failure log data to the master via the industrial network in response to a request from the master.

7. A program for causing a computer connected to a master and one or more slaves via an industrial network to execute:

a step of receiving a frame repeatedly transmitted from the master in the industrial network;

a step of causing a first storage unit to store log data of the frame;

a step of, when occurrence of an abnormality in the master or the one or more slaves has been detected, extracting, from the first storage unit, log data of the frame until a predetermined time before time when the occurrence of the abnormality was detected;

a step of causing a second storage unit to store the extracted log data of the frame as pre-failure log data; and

a step of transmitting the pre-failure log data to the master via the industrial network in response to a request from the master.

EP 4 787 098 A1

# FIG.1

FIG.2

# FIG.3

SYNCHRONIZATION SIGNAL
t1

SYNCHRONIZATION SIGNAL
t2

A

B

HEADER
DATA

HEADER
DATA

SYNCHRONOUS MASTER-SLAVE 20-1

AP PROCESSING

AP PROCESSING

t

HEADER
DATA | REFERENCE TIME

HEADER
DATA | REFERENCE TIME

SLAVE 20-2

AP PROCESSING

AP PROCESSING

t

TRANSMISSION DELAY

TRANSMISSION DELAY

EP 4 787 098 A1

# FIG.4

20

APPLICATION UNIT

20c

SYNCHRONIZATION SIGNAL

COMMUNICATION PROCESSING UNIT

MEMORY

20a

20b

# FIG.5

EP 4 787 098 A1

# FIG.6

EP 4 787 098 A1

FIG.7

EP 4 787 098 A1

# FIG.8

EP 4 787 098 A1

# FIG.9

MASTER 10

5500    A    6500    B    7500    C    8500    D    9500

Sy1    Sy2    Sy3    Sy4    Sy5

HEADER / DATA

SYNCHRONOUS MASTER-SLAVE 20-1

5800    6800    8600    11500

HEADER / DATA / REFERENCE TIME 5800, 6800, 8600, 11500

SLAVE 20-2

HEADER / DATA / REFERENCE TIME 5800, 6800, 8600, 11500

MONITORING DEVICE 30

5950    6950    7950    8950

HEADER / DATA / REFERENCE TIME 5800, 6800, 8600, 11500

EP 4 787 098 A1

# FIG.10

# FIG.11

EP 4 787 098 A1

| SYNCHRONIZATION ABNORMALITY A | SYNCHRONIZATION ABNORMALITY B | CAUSE OF ABNORMALITY |
|---|---|---|
| UNDETECTED | UNDETECTED | NORMAL |
| DETECTED | UNDETECTED | FRAME TRANSMISSION INTERVAL ABNORMALITY |
| UNDETECTED | DETECTED | CLOCK ABNORMALITY OF MONITORING DEVICE |
| DETECTED | DETECTED | CLOCK ABNORMALITY OF SYNCHRONOUS MASTER-SLAVE |

# FIG.12

```
START
  │
  ▼
ACQUIRE FRAME ──── S20
  │
  ▼
FRAME IS REFERENCE TIME FRAME? ──── S21
  │Yes                          │No
  ▼                             ▼
n=n + 1    ──── S23        n=n+1 (IN CASE OF m≧1) ──── S22
m = m + 1
  │
  ▼
Rt[m]=VALUE OF REFERENCE TIME ──── S24
  │
  ▼
Nt[m]=LOCAL CLOCK OF MONITORING DEVICE ──── S25
  │
  ▼
m=1 ? ──── S26
  │No    │Yes
  │      ▼
  │   CALCULATE TIME (T-start) WHEN ABNORMALITY
  │   DETECTION PROCESSING IS STARTED ──── S27
  │      │
  ▼      ▼
Tₙ=T-start+SYNCHRONIZATION SIGNAL PERIOD × (n-1) ──── S28
  │
  ▼
Tₙ₊₁=T-start+SYNCHRONIZATION SIGNAL PERIOD × (n) ──── S29
  │
  ▼
Tₙ< Rt[m] < Tₙ₊₁ ? ──── S30
  │Yes                    │No
  │              DETECT SYNCHRONIZATION ABNORMALITY A ──── S31
  ▼
m≧2? ──── S32
  │No          │Yes
  │            ▼
  │     E1=Rt[m] −Rt[m−1] ──── S33
  │            │
  │            ▼
  │     E2=Nt[m] −Nt[m−1] ──── S34
  │            │
  │            ▼
  │     Abs (1.0-(E1/E2)) IS EQUAL TO OR SMALLER
  │     THAN PREDETERMINED VALUE ? ──── S35
  │       │Yes              │No
  │       │      DETECT SYNCHRONIZATION ABNORMALITY B ──── S36
  ▼       ▼
END ABNORMALITY DETECTION PROCESSING ──── S37
  │Yes            │No
  ▼
END
```

$T_n = \text{T-start} + \text{SYNCHRONIZATION SIGNAL PERIOD} \times (n-1)$

$T_{n+1} = \text{T-start} + \text{SYNCHRONIZATION SIGNAL PERIOD} \times (n)$

$T_n < Rt[m] < T_{n+1}$ ?

$E1 = Rt[m] - Rt[m-1]$

$E2 = Nt[m] - Nt[m-1]$

$\text{Abs}(1.0 - (E1/E2))$ IS EQUAL TO OR SMALLER THAN PREDETERMINED VALUE ?

# FIG.13

# FIG.14

SYNCHRONI-
ZATION
SIGNAL 1
(t1)

SYNCHRONI-
ZATION
SIGNAL 2
(t2)

A

MASTER 10 ──────────────────────────► t

HEADER
DATA

SYNCHRONOUS MASTER-SLAVE 20-1 ──────── AP PROCESSING ──► t

HEADER
DATA | REFERENCE TIME

SLAVE 20-2 ──────── AP PROCESSING ──► t

TRANSMISSION
DELAY D

# FIG.15

# FIG.16

MASTER — 10

MONITORING DEVICE — 30

PRIOR SETTING (WD TIMER, DESIGNATED NUMBER OF CYCLES) — S100

SET ABNORMALITY DETECTION FLAG, SET ABNORMALITY DETECTION TIME CYCLE NUMBER — S101

STORE PRE-FAILURE LOG DATA, SET EXTRACTION COMPLETION FLAG — S102

S103 — READ FLAG (ABNORMALITY DETECTION FLAG, ABNORMALITY DETECTION TIME CYCLE NUMBER, EXTRACTION COMPLETION FLAG)

S104 — DETERMINE FRAME TO BE ACQUIRE OR THE LIKE

REPEAT FOR ACQUIRED FRAMES

DESIGNATE ACQUIRED FRAME — S105

DATA VALUE OF FRAME — S106

STORE DATA VALUE — S107

S108 — RESET COMMAND

S109 — DELETION OF PRE-FAILURE LOG DATA, ABNORMALITY DETECTION FLAG, RESET OF ABNORMALITY DETECTION TIME CYCLE NUMBER AND EXTRACTION COMPLETION FLAG

EP 4 787 098 A1

# FIG.17

| RECORD VALUE INDEX | IDENTIFIER OF SLAVE | NUMBER OF CYCLES | INDEX | SUBINDEX | VALUE |
|---|---|---|---|---|---|
| 0 | 0x1001 | 1000 | 0x607A | 0x00 | 10000 |
| 1 | 0x1001 | 1001 | 0x607A | 0x00 | 10010 |
| ... | 0x1001 | ... | ... | ... | ... |
| 100 | 0x1001 | 1100 | 0x607A | 0x00 | 11000 |
| 101 | 0x1001 | 1000 | 0x60FE | 0x00 | 0 |
| 102 | 0x1001 | 1001 | 0x60FE | 0x00 | 0 |
| ... | 0x1001 | ... | ... | ... | ... |
| 200 | 0x1001 | 1100 | 0x60FE | 0x00 | 1 |
| ... | ... | ... | ... | ... | ... |
| 1000 | 0x1002 | 1000 | 0x705B | 0x01 | 100 |
| 1001 | 0x1002 | 1001 | 0x705B | 0x01 | 100 |
| ... | 0x1002 | ... | ... | ... | ... |
| 1100 | 0x1002 | 1100 | 0x705B | 0x01 | 120 |
| ... | ... | ... | ... | ... | ... |

EP 4 787 098 A1

# EP 4 787 098 A1

## INTERNATIONAL SEARCH REPORT

International application No.

**PCT/JP2023/034878**

### A. CLASSIFICATION OF SUBJECT MATTER

*G05B 23/02*(2006.01)i; *H04L 7/00*(2006.01)i; *G05B 19/042*(2006.01)i
FI: G05B23/02 302Z; H04L7/00 990; H04L7/00 810; G05B19/042

According to International Patent Classification (IPC) or to both national classification and IPC

### B. FIELDS SEARCHED

Minimum documentation searched (classification system followed by classification symbols)

G05B23/02; H04L7/00; G05B19/042

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 11-261581 A (OMRON CORPORATION) 24 September 1999 (1999-09-24) | 1-3, 5-7 |
| | particularly, paragraphs [0024], [0030], [0056], [0086]-[0089], claim 5, fig. 1, 8, 10, 11 | |
| A | | 4 |
| Y | JP 2014-182538 A (SMART-FOA CO., LTD.) 29 September 2014 (2014-09-29) | 1-3, 5-7 |
| | particularly, paragraphs [0059], [0060], [0083] | |
| A | | 4 |
| Y | JP 2023-065118 A (HITACHI INDUSTRIAL EQUIPMENT SYSTEMS CO., LTD.) 12 May 2023 (2023-05-12) | 1-3, 5-7 |
| | particularly, paragraphs [0061], [0062], fig. 1 | |
| A | | 4 |
| A | JP 2013-197656 A (HITACHI, LTD.) 30 September 2013 (2013-09-30) | 1-7 |
| | entire text, all drawings | |
| A | JP 2009-157913 A (OMRON CORPORATION) 16 July 2009 (2009-07-16) | 1-7 |
| | entire text, all drawings | |

☑ Further documents are listed in the continuation of Box C.  ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **13 November 2023** | **28 November 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

# EP 4 787 098 A1

**INTERNATIONAL SEARCH REPORT**

International application No.

**PCT/JP2023/034878**

**C.     DOCUMENTS CONSIDERED TO BE RELEVANT**

| Category* | Citation of document, with indication, where appropriate, of the relevant passages | Relevant to claim No. |
|---|---|---|
| A | JP 2015-001758 A (OMRON CORPORATION) 05 January 2015 (2015-01-05) entire text, all drawings | 1-7 |
| A | JP 2020-188401 A (FUJITSU LIMITED) 19 November 2020 (2020-11-19) entire text, all drawings | 1-7 |
| A | JP 2014-057179 A (HITACHI, LTD.) 27 March 2014 (2014-03-27) entire text, all drawings | 1-7 |

Form PCT/ISA/210 (second sheet) (January 2015)

**INTERNATIONAL SEARCH REPORT**
Information on patent family members

International application No.

**PCT/JP2023/034878**

| Patent document cited in search report | | | Publication date (day/month/year) | Patent family member(s) | | | Publication date (day/month/year) |
|---|---|---|---|---|---|---|---|
| JP | 11-261581 | A | 24 September 1999 | (Family: none) | | | |
| JP | 2014-182538 | A | 29 September 2014 | US<br>particularly, paragraphs<br>[0098], [0099], [0124]<br>WO<br>CN | 2015/0278721<br><br><br>2014/148176<br>104204980 | A1<br><br><br>A1<br>A | |
| JP | 2023-065118 | A | 12 May 2023 | (Family: none) | | | |
| JP | 2013-197656 | A | 30 September 2013 | (Family: none) | | | |
| JP | 2009-157913 | A | 16 July 2009 | (Family: none) | | | |
| JP | 2015-001758 | A | 05 January 2015 | US<br>entire text, all drawings<br>WO<br>EP<br>CN | 2016/0091883<br><br>2014/200070<br>2990896<br>105209987 | A1<br><br>A1<br>A1<br>A | |
| JP | 2020-188401 | A | 19 November 2020 | (Family: none) | | | |
| JP | 2014-057179 | A | 27 March 2014 | (Family: none) | | | |

Form PCT/ISA/210 (patent family annex) (January 2015)

**EP 4 787 098 A1**

**Patent documents cited in the description**

- JP 2010170435 A